# EUROPEAN PATENT APPLICATION

(11) **EP 4 759 489 A1**
(43) Date of publication of application: **17.06.2026**
(21) Application number: 24875872.4
(22) Date of filing: 09.01.2024
(51) Int. Cl.: B25J 9/16, B23P 19/00

(54) **ADAPTATION CONTROL METHOD AND SYSTEM**

(30) Priority: 10.10.2023 CN 202311304233
(71) Applicant: Contemporary Amperex Technology Co., Limited, Ningde, Fujian 352100 (CN)
(72) Inventor: WU, Kai, Ningde, Fujian 352100 (CN); XIE, Yuming, Ningde, Fujian 352100 (CN); HUANG, Hua, Ningde, Fujian 352100 (CN); CHEN, Fanke, Ningde, Fujian 352100 (CN); SUN, Zhiqiang, Ningde, Fujian 352100 (CN); GUO, Wanjin, Ningde, Fujian 352100 (CN)
(74) Representative: Lorenz Seidler Gossel Part. mbB
(86) International application number: PCT/CN2024/071325
(87) International publication number: WO 2025/077040

(57) **Abstract**

Disclosed in the present disclosure are an adaptation control method and system. The method comprises: when a trolley to be tested reaches a preset position, acquiring the current blueprint information of said trolley, wherein a tray is placed on the upper surface of said trolley, and the tray is used for bearing a component to be transferred; determining target blueprint information of said trolley, wherein the target blueprint information has an association relationship with specification parameters of said component; and when the current blueprint information is inconsistent with the target blueprint information, controlling at least one limiting block on the tray to perform position adjustment, such that the tray adapts to said component, and thus said component can be placed on the tray.

## Description

### CROSS-REFERENCE TO RELATED APPLICATION

The present disclosure is based on, and claims priority to, Chinese Patent Application No. 202311304233.6, filed on October 10, 2023 and entitled "MATCHING CONTROL METHOD AND SYSTEM", the content of which is incorporated herein by reference in its entirety.

### TECHNICAL FIELD

The present disclosure relates to the technical field of automatic assembly, and in particular, to a matching control method and system.

### BACKGROUND

New energy batteries are increasingly widely used in life and industry. For example, new energy vehicles equipped with batteries have been widely used. In addition, batteries are also increasingly used in the field of energy storage.

With the continuous development of energy storage technologies, there are more and more types of power batteries, and the compatibility requirements for production lines are increasingly high. The battery production line mainly adopts semi-automated devices to implement processes such as battery processing, assembly, transportation, and detection.

In the related art, in a battery production line, a transfer apparatus is used to transfer a battery component from a previous process to a next process for assembly. However, each transfer apparatus can only adapt to a battery component of one specification and size, and cannot automatically accommodate products of different sizes. During product changeovers, the transfer apparatus needs to be manually replaced, resulting in low production efficiency.

### SUMMARY

The present disclosure provides a matching control method and system, which can be compatible with to-be-transferred components with different specification parameters, and help to improve the compatibility and the production efficiency during product changeover.

The technical solutions of the present disclosure are implemented as follows.

In a first aspect, embodiments of the present disclosure provide a component matching control method, which is applicable to a controller. The method includes:
acquiring current blueprint information of a to-be-measured vehicle when the to-be-measured vehicle reaches a preset position, where a tray is placed on an upper surface of the to-be-measured vehicle, and the tray is configured for carrying a to-be-transferred component;
determining target blueprint information of the to-be-measured vehicle, where the target blueprint information has an association relationship with a specification parameter of the to-be-transferred component; and
controlling, in the case that the current blueprint information is inconsistent with the target blueprint information, positional adjustment of at least one limiting block on the tray, such that the tray matches the to-be-transferred component to enable the to-be-transferred component to be placed.

By means of the above technical means, when the to-be-measured vehicle reaches the preset position, consistency matching is performed between the current blueprint information of the to-be-measured vehicle and the target blueprint information; and in the case that the current blueprint information is inconsistent with the target blueprint information, the controller can control the at least one limiting block on the tray to perform positional adjustment, such that the tray matches the to-be-transferred component, and the to-be-transferred component can be placed in the tray. In this way, the automatic selection of corresponding target blueprint information based on the to-be-transferred components with different specification parameters enhances data security; in addition, during the product matching process, the manual replacement of the limiting block is changed to the automatic replacement, and moreover, the changeover logic of the robot is simple and no additional sensors are required, such that the degree of automation of the device is improved while labor costs and production costs are reduced, thereby improving the production efficiency during product matching; moreover, by performing gripping and placing actions on the at least one limiting block on the tray, the limiting blocks can adapt to the to-be-transferred components with different specification parameters, thereby improving the compatibility.

In some embodiments, before controlling the positional adjustment of the at least one limiting block on the tray, the method further includes: controlling a driving member to perform a first driving action to drive a transmission member to move to an initial position; and after completing the positional adjustment of the at least one limiting block on the tray, the method further includes: controlling the driving member to perform a second driving action to drive the transmission member to move to a corresponding axial positioning position in the target blueprint information.

By means of the above technical means, before the limiting block is adjusted, the driving member is controlled to drive the transmission member to move to the initial position; and after the adjustment of the limiting block is completed, the driving member is controlled to drive the transmission member to move to the corresponding axial positioning position in the target blueprint information. In this way, the debugging difficulty can be reduced, and the on-site debugging efficiency can be improved.

In some embodiments, controlling the positional adjustment of the at least one limiting block on the tray includes: sending a control instruction to a robot, where the control instruction is used to control a gripper mechanism arranged on the robot to perform gripping and placing actions on the at least one limiting block on the tray, such that an adjusted position of the at least one limiting block aligns with a position of a corresponding limiting block in the target blueprint information.

By means of the above technical means, the controller sends the control instruction to the robot so as to control the gripper mechanism on the robot to perform gripping and placing actions on the limiting block on the tray, such that the tray can match the to-be-transferred component, and the to-be-transferred component can be placed on the tray; moreover, labor costs and production costs can be reduced, and the production efficiency during product matching can be improved.

In some embodiments, sending the control instruction to the robot includes: sending a first control instruction to the robot, where the first control instruction is used to control the gripper mechanism to grip the limiting block on the tray from a to-be-gripped position and control the gripper mechanism to place the limiting block at a to-be-placed position in the tray, and the position of the limiting block aligns with the position of the corresponding limiting block in the target blueprint information.

By means of the above technical means, in the case that the limiting block on the tray needs to be moved from a hole position serial number of a certain changeover plate to a hole position serial number of another changeover plate, or from a hole position serial number of a certain changeover plate to another hole position serial number of the changeover plate, the first control instruction is sent to the robot at this time, such that the tray can match the to-be-transferred component, labor costs and production costs can be reduced, and the production efficiency during product matching can be improved.

In some embodiments, the limiting block includes at least a first size limiting block and a second size limiting block; and sending the control instruction to the robot includes: sending a second control instruction to the robot in the case that the limiting block on the tray is the first size limiting block and the corresponding limiting block in the target blueprint information is the second size limiting block, where the second control instruction is used to control the gripper mechanism to grip the first size limiting block on the tray from a to-be-gripped position and place the first size limiting block at a preset storage position, and control the gripper mechanism to grip the second size limiting block from the preset storage position and place the second size limiting block at a to-be-placed position in the tray, and a position of the second size limiting block aligns with a position of a corresponding limiting block in the target blueprint information.

By means of the above technical means, in the case that the size of the limiting block in the current blueprint information is different from the size of the limiting block in the target blueprint information, the original limiting block in the tray needs to be placed into the preset storage position first, and then the limiting block required in the target blueprint information is gripped from the preset storage position; the addition of an automated storage and retrieval system makes it accommodate to-be-transferred components of more sizes, thereby improving the compatibility.

In some embodiments, sending the control instruction to the robot further includes: sending a photographing instruction to the robot, where the photographing instruction is used to control a visual detection system arranged on the robot to photograph the to-be-gripped position and the to-be-placed position, and is used to perform offset compensation on positions of the to-be-gripped position and the to-be-placed position.

By means of the above technical means, since the robot is provided with a visual detection system, the controller can control the visual detection system to visually guide and correct the gripping position or the placement position, and the target position to be reached by the gripper assembly in the gripper mechanism can be accurately determined based on the corresponding offset data, which can improve the efficiency of replacement or positional adjustment of the limiting block.

In some embodiments, sending the control instruction to the robot further includes: controlling a visual detection system on the robot to move to a photographing position of the to-be-gripped position, and sending a first photographing instruction to the robot, where the first photographing instruction is used to instruct the visual detection system to photograph the to-be-gripped position; after the visual detection system completes the photographing of the to-be-gripped position, controlling the visual detection system to perform calculation based on a photographed first image to determine a first offset of the to-be-gripped position; then compensating an initial position of the to-be-gripped position based on the first offset to determine a target position of the to-be-gripped position; and then sending a first gripping instruction to the robot, controlling the gripper mechanism to move to the to-be-gripped position, and after moving to the target position of the to-be-gripped position, controlling, based on the first gripping instruction, the gripper mechanism to grip the limiting block on the to-be-gripped position.

By means of the above technical means, since the robot is provided with the gripper mechanism and the visual detection system, the controller can control the visual detection system to visually guide and correct the gripping position, and the target position to be reached by the gripper assembly in the gripper mechanism can be accurately determined based on the corresponding offset data, such that the controller can control the gripper assembly to move to the target position according to the determined target position, and then the gripper assembly is enabled to move to the accurate gripping position to grip or place the limiting block, thereby improving the efficiency of replacement or positional adjustment of the limiting block.

In some embodiments, sending the control instruction to the robot further includes: controlling a visual detection system on the robot to move to a photographing position of the to-be-placed position, and sending a second photographing instruction to the robot, where the second photographing instruction is used to instruct the visual detection system to photograph the to-be-placed position; after the visual detection system completes the photographing of the to-be-placed position, controlling the visual detection system to perform calculation based on a photographed second image to determine a second offset of the to-be-placed position; then compensating an initial position of the to-be-placed position based on the second offset to determine a target position of the to-be-placed position; and then sending a first placement instruction to the robot, controlling the gripper mechanism to move to the to-be-placed position, and after moving to the target position of the to-be-placed position, controlling, based on the first placement instruction, the gripper mechanism to place the limiting block on the to-be-placed position.

By means of the above technical means, since the robot is provided with the gripper mechanism and the visual detection system, the controller can control the visual detection system to visually guide and correct the placement position, and the target position to be reached by the gripper assembly in the gripper mechanism can be accurately determined based on the corresponding offset data, such that the controller can control the gripper assembly to move to the target position according to the determined target position, and then the gripper assembly can move to the accurate placement position to grip and place the limiting block, thereby improving the efficiency of replacement or positional adjustment of the limiting block.

In some embodiments, the method further includes: determining, in the case that the adjusted position of the at least one limiting block aligns with the position of the limiting block in the target blueprint information, that the tray successfully matches the to-be-transferred component.

By means of the above technical means, it can be determined that the tray matches the to-be-transferred component only when the adjusted position of the at least one limiting block aligns with the position of the limiting block in the target blueprint information, such that the to-be-transferred component can be placed in the tray.

In some embodiments, the method further includes: constructing, in advance, the target blueprint information according to the specification parameter of the to-be-transferred component; and
constructing, in advance, the target blueprint information according to the specification parameter of the to-be-transferred component includes: determining, according to the specification parameter of the to-be-transferred component, at least one changeover plate for supporting the to-be-transferred component and the limiting blocks on the at least one changeover plate; and determining, according to the limiting blocks on the at least one changeover plate, hole position serial numbers of the limiting blocks on the at least one changeover plate, and correspondingly writing the hole position serial numbers into positions of the limiting blocks on the at least one changeover plate in the target blueprint information.

By means of the above technical means, the target blueprint information can be constructed in advance according to the specification parameter of the to-be-transferred component, and the target blueprint information includes the position of the limiting block required by the to-be-transferred component, such that in the subsequent product matching process, the controller can receive the target blueprint information issued by the manufacturing execution system, then determine whether the current blueprint information of the to-be-measured vehicle is consistent with the target blueprint information, and further determine whether the position of the at least one limiting block on the tray needs to be adjusted, thereby reducing the labor costs and the production costs, and improving the production efficiency.

In some embodiments, the method further includes: determining, in the case that a hole position serial number of one changeover plate in the target blueprint information is zero, that no limiting block is placed at a position indicated by the hole position serial number in the changeover plate; and determining, in the case that a hole position serial number of one changeover plate in the target blueprint information is non-zero, to place the limiting block at a position indicated by the hole position serial number in the changeover plate.

By means of the above technical means, according to the hole position serial number written in the target blueprint information, it can be determined whether the limiting block is placed at the position indicated by the hole position serial number, such that the production efficiency during product matching can be improved.

In some embodiments, when controlling the positional adjustment of the at least one limiting block on the tray, the method further includes: displaying, in response to a first operation instruction, the current gripping and placing information on the human-machine interface, where the current gripping and placing information includes at least: a number of gripping and placing times, a gripping count, a placing count, the to-be-gripped position of the limiting block, and the to-be-placed position of the limiting block.

By means of the above technical means, the current gripping and placing information is displayed on the human-machine interface, and the gripping position and the placement position where the limiting block currently needs to be gripped and placed can be intuitively seen, such that the user can know the current working status of the limiting block and the gripping and placing actions in time.

In some embodiments, the method further includes: controlling, based on the current gripping and placing information, the limiting block on the tray to be adjusted from the to-be-gripped position of the limiting block to the to-be-placed position of the limiting block.

By means of the above technical means, in the case that the gripper mechanism of the robot grips the limiting block on the tray from the gripping position to the corresponding placement position, the user can intuitively know the current working status of the limiting block according to the human-machine interface, thereby improving the gripping and placing efficiency of the limiting block.

In some embodiments, the method further includes: updating the current gripping and placing information on the human-machine interface after the positional adjustment based on the current gripping and placing information is completed; and
updating the current gripping and placing information on the human-machine interface includes: controlling the number of gripping and placing times, the gripping count, and the placing count to separately perform an increment-by-one operation, updating the to-be-gripped position of the limiting block to a new to-be-gripped position of the limiting block, and updating the to-be-placed position of the limiting block to a new to-be-placed position of the limiting block.

By means of the above technical means, after the gripper mechanism of the robot grips the limiting block on the tray from the gripping position to the corresponding placement position, the current gripping and placing information displayed on the human-machine interface is updated in real time, such that the user can intuitively know the number of the completed gripping and placing actions, the gripping count, the placing count, and the like, which helps to improve the gripping and placing efficiency of the limiting block.

In a second aspect, the embodiments of the present disclosure provide a matching control method, which is applicable to a robot. The robot includes a gripper mechanism arranged at a tail end of a mechanical arm, and the method includes:
receiving a control instruction sent by a controller in the case that a to-be-measured vehicle reaches a preset position and the controller detects that current blueprint information of the to-be-measured vehicle is inconsistent with target blueprint information; where a tray is placed on the to-be-measured vehicle, and the tray is configured for carrying a to-be-transferred component; and
controlling, based on the control instruction, the gripper mechanism to perform gripping and placing actions on at least one limiting block on the tray, such that the tray matches the to-be-transferred component.

By means of the above technical means, the robot receives the control instruction sent by the controller, and the gripper mechanism on the robot can perform gripping and placing actions on the limiting block on the tray, such that the tray can match the to-be-transferred component, and the to-be-transferred component can be placed on the tray; moreover, labor costs and production costs can be reduced, and the production efficiency during product matching can be improved.

In some embodiments, controlling, based on the control instruction, the gripper mechanism to perform the gripping and placing actions on the at least one limiting block on the tray includes: receiving a first control instruction sent by the controller; and controlling, based on the first control instruction, the gripper mechanism to grip the limiting block on the tray from a to-be-gripped position, and controlling the gripper mechanism to place the limiting block at a to-be-placed position in the tray, where the position of the limiting block aligns with the position of the corresponding limiting block in the target blueprint information.

By means of the above technical means, in the case that the limiting block on the tray needs to be moved from a hole position serial number of a certain changeover plate to a hole position serial number of another changeover plate, or from a hole position serial number of a certain changeover plate to another hole position serial number of the changeover plate, the robot receives the first control instruction sent by the controller at this time, such that the tray can match the to-be-transferred component, labor costs and production costs can be also reduced, and the production efficiency during product matching can be improved.

In some embodiments, the limiting block includes a first size limiting block and a second size limiting block; and controlling, based on the control instruction, the gripper mechanism to perform the gripping and placing actions on the at least one limiting block on the tray includes: receiving, in the case that the limiting block on the tray is the first size limiting block and the corresponding limiting block in the target blueprint information is the second size limiting block, a second control instruction sent by the controller; and controlling, based on the second control instruction, the gripper mechanism to grip the first size limiting block on the tray from a to-be-gripped position and place the first size limiting block at a preset storage position, and controlling the gripper mechanism to grip the second size limiting block from the preset storage position and place the second size limiting block at a to-be-placed position in the tray, where a position of the second size limiting block aligns with a position of a corresponding limiting block in the target blueprint information.

By means of the above technical means, in the case that the size of the limiting block in the current blueprint information is different from the size of the limiting block in the target blueprint information, the robot needs to first place the original limiting block in the tray into the preset storage position, and then grip the limiting block required in the target blueprint information from the preset storage position; the addition of an automated storage and retrieval system makes it accommodate to-be-transferred components of more sizes, thereby improving the compatibility.

In some embodiments, the gripper mechanism further includes a visual detection system, and the method further includes: receiving a photographing instruction sent by the controller; and controlling, based on the photographing instruction, the visual detection system to photograph the to-be-gripped position and the to-be-placed position, and performing offset compensation on positions of the to-be-gripped position and the to-be-placed position according to the photographed images.

By means of the above technical means, since the robot is provided with a visual detection system, the controller can control the visual detection system to visually guide and correct the gripping position or the placement position, and the target position to be reached by the gripper assembly in the gripper mechanism can be accurately determined based on the corresponding offset data, which can improve the efficiency of replacement or positional adjustment of the limiting block.

In some embodiments, controlling, based on the control instruction, the gripper mechanism to perform the gripping and placing actions on the at least one limiting block on the tray further includes: after the visual detection system is moved to the photographing position of the to-be-gripped position, receiving a first photographing instruction sent by the controller; photographing, based on the first photographing instruction, the to-be-gripped position by using the visual detection system, and performing calculation based on a photographed first image to determine a first offset of the to-be-gripped position; compensating an initial position of the to-be-gripped position based on the first offset to determine a target position of the to-be-gripped position; and receiving a first gripping instruction sent by the controller, and controlling the gripper mechanism to move to the to-be-gripped position, and after moving to the target position of the to-be-gripped position, gripping the limiting block at the to-be-gripped position by using the gripper mechanism.

By means of the above technical means, the controller can control the visual detection system to visually guide and correct the gripping position, and the target position to be reached by the gripper assembly in the gripper mechanism can be accurately determined based on the corresponding offset data, such that the controller can control the gripper assembly to move to the target position according to the determined target position, and then the gripper assembly is enabled to move to the accurate gripping position to grip or place the limiting block, thereby improving the efficiency of replacement or positional adjustment of the limiting block.

In some embodiments, controlling, based on the control instruction, the gripper mechanism to perform the gripping and placing actions on the at least one limiting block on the tray further includes: after moving the visual detection system to the photographing position of the to-be-placed position, receiving a second photographing instruction sent by the controller; photographing, based on the second photographing instruction, the to-be-placed position by using the visual detection system, and performing calculation based on a photographed second image to determine a second offset of the to-be-placed position; compensating an initial position of the to-be-placed position based on the second offset to determine a target position of the to-be-placed position; and receiving a first placement instruction sent by the controller, and controlling the gripper mechanism to move to the to-be-placed position, and after moving to the target position of the to-be-placed position, placing the limiting block at the to-be-placed position by using the gripper mechanism.

By means of the above technical means, the controller can control the visual detection system to visually guide and correct the placement position, and the target position to be reached by the gripper assembly in the gripper mechanism can be accurately determined based on the corresponding offset data, such that the controller can control the gripper assembly to move to the target position according to the determined target position, and then the gripper assembly can move to the accurate placement position to grip and place the limiting block, thereby improving the efficiency of replacement or positional adjustment of the limiting block.

In a third aspect, the embodiments of the present disclosure provide a matching system. The matching system includes:
a to-be-measured vehicle, including a tray and at least one limiting block arranged on the tray, where the tray is configured for carrying a to-be-transferred component, and the at least one limiting block is configured for limiting a position of the to-be-transferred component on the tray;
a robot, where a gripper mechanism is arranged on a mechanical arm of the robot, and the robot is configured for driving the gripper mechanism to move;
a storage mechanism, arranged at a position corresponding to the robot, the storage mechanism being configured for storing the limiting block; and
a jacking mechanism, arranged at a position corresponding to the robot, the jacking mechanism being configured for jacking and supporting the to-be-measured vehicle;
where in the case that the to-be-measured vehicle reaches a preset position and current blueprint information of the to-be-measured vehicle is inconsistent with target blueprint information of the to-be-measured vehicle, the gripper mechanism can grip or release the limiting block, and driven by the robot, can transport the limiting block to a position corresponding to a to-be-placed position in the tray, or transport the limiting block to a preset storage position in the storage mechanism; where the target blueprint information has an association relationship with a specification parameter of the to-be-transferred component.

By means of the above technical means, since the tray is arranged in the to-be-measured vehicle, and the limiting blocks are arranged on the tray, the to-be-transferred component can be carried by the tray, and the position of the to-be-transferred component on the tray can be limited by the limiting block, so as to limit the to-be-transferred component; in addition, the gripper mechanism is arranged on the mechanical arm of the robot, the robot can drive the gripper mechanism to move to a position corresponding to the limiting block, and the gripper mechanism can grip or place the limiting block; moreover, the storage mechanism is arranged at a position corresponding to the robot, and the to-be-used limiting block can be stored in the storage mechanism; meanwhile, the jacking mechanism is further arranged at a position corresponding to the robot, and the to-be-measured vehicle can be jacked, supported, and limited by the jacking mechanism, such that the to-be-measured vehicle can be parked at a preset position. In this way, after the to-be-measured vehicle is stopped at the preset position by the jacking mechanism, the robot can drive the gripper mechanism to take away the limiting block that needs to be replaced on the to-be-measured vehicle, and place the limiting block at the preset storage position in the storage mechanism; or the robot can drive the gripper mechanism to grip the required limiting block from the storage mechanism, and mount the limiting block at the corresponding position on the tray, such that the adjustment of the to-be-measured vehicle can be quickly and efficiently completed, and the to-be-measured vehicle matches the to-be-transferred component that needs to be transferred. This enables the to-be-measured vehicle to be compatible with the to-be-transferred components with different specification parameters, which is beneficial to improving the generation efficiency during product changeover.

In some embodiments, the tray includes a tray frame, a transverse clamping assembly, and a longitudinal clamping assembly; where the transverse clamping assembly includes a transverse clamping member and a transverse transmission member, the transverse clamping member is slidably connected to the tray frame and is provided with a transverse mounting part, and the limiting block can be connected to the transverse clamping member through the transverse mounting part; the transverse transmission member is in transmission connection with the transverse clamping member; in a movement process of the transverse transmission member, the transverse clamping member can be driven to move in a first direction;
the longitudinal clamping assembly includes a longitudinal clamping member and a longitudinal transmission member, the longitudinal clamping member is slidably connected to the tray frame and is provided with a longitudinal mounting part, and the limiting block can be connected to the longitudinal clamping member through the longitudinal mounting part; the longitudinal transmission member is in transmission connection with the longitudinal clamping member; in a movement process of the longitudinal transmission member, the longitudinal clamping member can be driven to move in a second direction; the second direction has an included angle with the first direction.

By means of the above technical means, since the tray frame is arranged in the tray, other components and parts in the tray can be carried and mounted by the tray frame; in addition, the tray frame is provided with the transverse clamping member and the transverse transmission member which are in transmission connection, and the position of the transverse clamping member on the tray frame can be adjusted by the transverse transmission member; meanwhile, the tray frame is provided with the longitudinal clamping member and the longitudinal transmission member which are in transmission connection, and the position of the longitudinal clamping member on the tray frame can be adjusted by the longitudinal transmission member, such that the size and shape of the tray can be adjusted in at least two directions, and then the tray can match the to-be-transferred component.

In some embodiments, the longitudinal clamping member includes a first longitudinal clamping member and a second longitudinal clamping member, and the first longitudinal clamping member and the second longitudinal clamping member are both in transmission connection with the longitudinal transmission member; in the movement process of the longitudinal transmission member, the first longitudinal clamping member and the second longitudinal clamping member can be driven to move toward or away from each other, such that the first longitudinal clamping member and the second longitudinal clamping member cooperatively fix the to-be-transferred component.

By means of the above technical means, since the longitudinal clamping member is configured as a structure including the first longitudinal clamping member and the second longitudinal clamping member, and the first longitudinal clamping member and the second longitudinal clamping member are both in transmission connection with the longitudinal transmission member, the longitudinal transmission member may drive the first longitudinal clamping member and the second longitudinal clamping member to synchronously move toward or away from each other, such that the distance between the first longitudinal clamping member and the second longitudinal clamping member can be conveniently adjusted, and the distance between the first longitudinal clamping member and the second longitudinal clamping member matches the width of the to-be-transferred component in the second direction B.

In some embodiments, the first longitudinal clamping member includes a first changeover plate and at least one first limiting block arranged on the first changeover plate; the second longitudinal clamping member includes a second changeover plate and at least one second limiting block arranged on the second changeover plate; where a plurality of longitudinal mounting parts are arranged on both the first changeover plate and the second changeover plate at intervals, longitudinal connecting parts are arranged at the bottoms of both the first limiting block and the second limiting block, and the longitudinal mounting parts are detachably connected to the longitudinal connecting parts.

By means of the above technical means, since the first changeover plate and the first limiting block are arranged in the first longitudinal clamping member, the second changeover plate and the second limiting block are arranged in the second longitudinal clamping member, and the plurality of longitudinal mounting parts are separately arranged on the first changeover plate and the second changeover plate, the first limiting blocks and the second limiting blocks may be separately arranged at different positions on the first changeover plate and the second changeover plate, such that the longitudinal clamping member can match the to-be-transferred components of different sizes; in addition, the longitudinal mounting part and the longitudinal connecting part are configured as detachable connection structures, so as to facilitate the replacement or positional adjustment of the first limiting block and the second limiting block.

In some embodiments, the transverse clamping member includes a first transverse clamping member and a second transverse clamping member arranged opposite to each other, the first transverse clamping member is in transmission connection with the transverse transmission member, and the second transverse clamping member is fixed to the tray frame; in the movement process of the transverse transmission member, the first transverse clamping member can be driven to move in a direction close to or away from the second transverse clamping member, such that the first transverse clamping member and the second transverse clamping member cooperatively clamp the to-be-transferred component.

By means of the above technical means, since the transverse clamping member is configured as a structure including the first transverse clamping member and the second transverse clamping member, and the first transverse clamping member is in transmission connection with the transverse transmission member, the transverse transmission member may drive the first transverse clamping member to move in a direction close to or away from the second transverse clamping member, such that the distance between the first transverse clamping member and the second transverse clamping member can be conveniently adjusted, and the distance between the first transverse clamping member and the second transverse clamping member matches the length of the to-be-transferred component in the first direction.

In some embodiments, the first transverse clamping member includes a third changeover plate and at least one third limiting block arranged on the third changeover plate; the second transverse clamping member includes a fourth changeover plate and at least one fourth limiting block arranged on the fourth changeover plate; where a plurality of transverse mounting parts are arranged on both the third changeover plate and the fourth changeover plate at intervals, transverse connecting parts are arranged at the bottoms of the third limiting block and the fourth limiting block, and the transverse mounting parts are detachably connected to the transverse connecting parts.

By means of the above technical means, since the third changeover plate and the third limiting block are arranged in the first transverse clamping member, the fourth changeover plate and the fourth limiting block are arranged in the second transverse clamping member, and the plurality of transverse mounting parts are separately arranged on the third changeover plate and the fourth changeover plate, the third limiting blocks and the fourth limiting blocks may be separately arranged at different positions on the third changeover plate and the fourth changeover plate, such that the transverse clamping member can match the to-be-transferred components of different sizes; in addition, the transverse mounting part and the transverse connecting part are configured as detachable connection structures, so as to facilitate the replacement or positional adjustment of the third limiting block and the fourth limiting block.

In some embodiments, the gripper mechanism includes: a connecting member, a moving assembly, and a gripper assembly; the gripper mechanism is arranged on the mechanical arm of the robot through the connecting member; the moving assembly is arranged on the connecting member; the gripper assembly is arranged on the moving assembly; driven by the moving assembly, the gripper assembly is movable in a direction close to or away from the to-be-placed position.

By means of the above technical means, since the connecting member is arranged in the gripper mechanism, the gripper mechanism may be mounted on the mechanical arm through the connecting member; in addition, the moving assembly is arranged on the connecting member, and the gripper assembly is arranged on the moving assembly; the moving assembly may drive the gripper assembly to move to a required position, such that the gripper assembly is close to the limiting block or away from the limiting block, or the gripper assembly is close to or away from the to-be-placed position.

In some embodiments, the moving assembly includes a vertical driving member and a vertical sliding assembly; the vertical sliding assembly is arranged on the connecting member, and the gripper assembly is arranged on the vertical sliding assembly; one end of the vertical driving member is connected to the connecting member, and the other end of the vertical driving member is connected to the gripper assembly; driven by the vertical driving member, the gripper assembly is movable in an extension direction of the vertical sliding assembly.

By means of the above technical means, since the vertical sliding assembly is provided and the gripper assembly is connected to the vertical sliding assembly, the gripper assembly is movable in the extension direction of the vertical sliding assembly; in addition, the vertical driving member is provided, the vertical driving member is connected to the gripper assembly, and the gripper assembly can be driven by the vertical driving member to move in the extension direction of the vertical sliding assembly, such that the gripper assembly is movable to a required position.

In some embodiments, the gripper assembly includes a gripper driving member and at least two gripper members. One of the at least two gripper members is slidably arranged on the moving assembly, one end of the gripper driving member is connected to the moving assembly, and the other end of the gripper driving member is connected to the gripper member slidably arranged on the moving assembly. Driven by the gripper driving member, the at least two gripper members are movable toward each other to grip the limiting block, or the at least two gripper members are movable away from each other to release the limiting block.

By means of the above technical means, since at least two gripper members are provided and one gripper member is slidably arranged on the moving assembly, the gripper driving member is connected to the slidable gripper member, and the slidable gripper member may be driven by the gripper driving member to move, such that the two gripper members move toward or away from each other, thereby gripping the limiting block or releasing the limiting block.

In some embodiments, the gripper mechanism further includes a visual detection system; the visual detection system can be electrically coupled to a controller, and the visual detection system is configured for photographing a to-be-gripped position and the to-be-placed position and performing offset compensation on positions of the to-be-gripped position and the to-be-placed position.

By means of the above technical means, since the visual detection system is arranged on the gripper mechanism, the positions of the to-be-gripped position and the to-be-placed position can be compensated by the visual detection system to determine the information of the target position to be reached by the gripper assembly in the gripper mechanism, such that the gripper assembly can be controlled to move to the target position according to the determined target position, and then the gripper assembly is movable to an accurate gripping position or placement position to improve the efficiency of replacement or positional adjustment of the limiting block on the tray.

In some embodiments, the storage mechanism includes a supporting assembly and a carrying assembly. The carrying assembly is slidably arranged on the supporting assembly, the carrying assembly is provided with a storage portion adapted to the limiting block, and the supporting assembly is configured for supporting the carrying assembly.

By means of the above technical means, since the carrying assembly is slidably arranged on the supporting assembly, the to-be-used carrying assembly is slidable to a preset position as required, such that the gripper mechanism can grip or place the limiting block; in addition, the carrying assembly is provided with the storage portions, each limiting block can be placed in the corresponding storage portion, and the limiting block can be limited by the storage portion, such that the limiting block is stored at a determined position, which can also facilitate the gripper mechanism to grip or place the limiting block.

In some embodiments, the supporting assembly includes two supports arranged opposite to each other, the carrying assembly includes a plurality of carrying plates, the carrying plates are provided with the storage portions, and each carrying plate is slidably arranged between the two supports.

By means of the above technical means, the supporting assembly is configured as a structure including two supports, which can provide stable support for the carrying assembly; meanwhile, the plurality of carrying plates are slidably arranged between the two supports, such that different carrying plates can be at different positions to facilitate the gripping and placement of the limiting blocks on the carrying plates.

According to the matching control method and system provided in the embodiments of the present disclosure, when the to-be-measured vehicle reaches the preset position, consistency matching is performed between the current blueprint information of the to-be-measured vehicle and the target blueprint information, where the target blueprint information has an association relationship with the specification parameter of the to-be-transferred component; in the case that the current blueprint information is inconsistent with the target blueprint information, the controller may control positional adjustment of the at least one limiting block on the tray, such that the tray matches the to-be-transferred component, and the to-be-transferred component can be placed in the tray. Thus, in an aspect, the automatic selection of corresponding target blueprint information based on the to-be-transferred components with different specification parameters enhances data security; in another aspect, during the product matching process, the manual replacement of the limiting block is changed to the automatic replacement, and in addition, the changeover logic of the robot is simple and no additional sensors are required, such that the degree of automation of the device is improved while labor costs and production costs are reduced, thereby improving the production efficiency during product matching; in yet another aspect, by controlling the distance adjustment of the screw rod in the tray and performing gripping and placing actions on the at least one limiting block on the tray, coupled with the added storage function, the limiting blocks can adapt to the to-be-transferred components with different specification parameters, thereby improving the compatibility.

### BRIEF DESCRIPTION OF THE DRAWINGS

FIG. 1 is a schematic diagram of a composition structure of a matching system according to an embodiment of the present disclosure;
FIG. 2 is a schematic diagram of a composition structure of a tray according to an embodiment of the present disclosure;
FIG. 3 is a schematic diagram of a three-dimensional structure of a limiting block according to an embodiment of the present disclosure;
FIG. 4 is a schematic front view of a composition structure of a gripper mechanism according to an embodiment of the present disclosure;
FIG. 5 is a schematic left view of a composition structure of a gripper mechanism according to an embodiment of the present disclosure;
FIG. 6 is a schematic front view of a composition structure of a storage mechanism according to an embodiment of the present disclosure;
FIG. 7 is a schematic top view of a composition structure of a storage mechanism according to an embodiment of the present disclosure;
FIG. 8 is a first schematic flowchart of a matching control method according to an embodiment of the present disclosure;
FIG. 9 is a schematic diagram of a composition structure of a formula according to an embodiment of the present disclosure;
FIG. 10 is a schematic diagram of a distribution of changeover plates on a tray according to an embodiment of the present disclosure;
FIG. 11 is a schematic top view of a structure of a to-be-gripped position according to an embodiment of the present disclosure;
FIG. 12 is a schematic top view of a structure of a to-be-placed position according to an embodiment of the present disclosure;
FIG. 13 is a second schematic flowchart of a matching control method according to an embodiment of the present disclosure;
FIG. 14 is a first detailed schematic flowchart of a matching control method according to an embodiment of the present disclosure;
FIG. 15 is a second detailed schematic flowchart of a matching control method according to an embodiment of the present disclosure;
FIG. 16 is a schematic diagram of an operation interface of an electronic tag according to an embodiment of the present disclosure;
FIG. 17 is a third schematic flowchart of a matching control method according to an embodiment of the present disclosure;
FIG. 18 is a third detailed schematic flowchart of a matching control method according to an embodiment of the present disclosure; and
FIG. 19 is a schematic diagram of a display interface of a visualization device according to an embodiment of the present disclosure.

### Reference numerals:

1-to-be-measured vehicle; 11-tray; 111-tray frame; 112-transverse clamping assembly; 1121-transverse clamping member; 11211-first transverse clamping member; 11212-second transverse clamping member; 1122-transverse transmission member; 1123-transverse mounting part; 113-longitudinal clamping assembly; 1131-longitudinal clamping member; 11311-first longitudinal clamping member; 11312-second longitudinal clamping member; 1132-longitudinal transmission member; 1133-longitudinal mounting part; 12-limiting block; 121-step structure, step surface-122; connecting post 123; clamping protrusion-1231; 2-gripper mechanism; 21-connecting member; 22-moving assembly; 221-vertical driving member; 222-vertical sliding assembly; 2221-vertical guide rail; 2222-vertical slider; 23-gripper assembly; 231-gripper driving member; 232-gripper member; 233-gripper guide rail; 234-gripper slider; 24-moving plate; 25-visual detection system; 3-storage mechanism; 31-supporting assembly; 311-first support; 312-second support; 32-carrying assembly; 321-storage portion; 322-first carrying plate; 323-second carrying plate; 4-jacking mechanism; 5-robot; A-first direction; B-second direction.

### DETAILED DESCRIPTION

In order to understand the features and technical contents of the embodiments of the present disclosure in more detail, the implementation of the embodiments of the present disclosure will be described in detail below with reference to the accompanying drawings. The accompanying drawings are for reference only and are not intended to limit the embodiments of the present disclosure.

Unless otherwise defined, all technical and scientific terms used herein have the same meaning as commonly understood by those skilled in the art to which the present disclosure belongs. The terms used herein are for the purpose of describing the embodiments of the present disclosure only and are not intended to limit the present disclosure.

In the following description, reference is made to "some embodiments", which describe a subset of all possible embodiments, but it can be understood that "some embodiments" may be the same subset or different subsets of all possible embodiments and may be combined with each other without conflict.

It should also be noted that the terms "first\second\third" referred to in the embodiments of the present disclosure are merely used to distinguish similar objects and do not represent a specific ordering for the objects. It can be understood that "first\second\third" may be subjected to interchange of a specific order or sequence if permitted, such that the embodiments of the present disclosure described herein can be implemented in an order other than that shown or described herein.

It should also be noted that the term "and/or" referred to in the embodiments of the present disclosure is only an association relationship that describes the associated objects, and indicates that there may be three relationships. For example, A and/or B may indicate that: only A is present, both A and B are present, and only B is present. In addition, the character "/" herein generally indicates an "or" relationship between the associated objects before and after the "/".

It should also be noted that the term "plurality of" referred to in the embodiments of the present disclosure refers to two or more (including two). Similarly, "plurality of groups" refers to two or more (including two) groups, and "plurality of pieces" refers to two or more (including two) pieces.

It should also be noted that the terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential" and the like referred to in the embodiments of the present disclosure indicate orientations or positional relationships based on those shown in the drawings. They are merely for the convenience of describing the embodiments of the present disclosure and simplifying the description, rather than indicating or implying that the apparatus or element referred to must have a specific orientation or be constructed and operated in the specific orientation, and thus should not be construed as a limitation to the embodiments of the present disclosure.

At present, new energy batteries are being applied more and more widely in life and industry. New energy batteries are not only applied in energy storage power systems such as hydropower, thermal power, wind power and solar power stations, but are also widely applied in electric transportation vehicles such as electric bicycles, electric motorcycles, electric vehicles, as well as in aerospace and other fields. With the continuous expansion of the application field of power batteries, the market demand for power batteries is also constantly increasing.

In the embodiments of the present disclosure, the battery may be a battery cell, or the battery may be a battery module or a battery pack including a plurality of battery cells. The battery cell refers to a basic unit that can realize the mutual conversion between chemical energy and electrical energy. It can be used for making battery modules or battery packs to supply power to electrical apparatuses. The battery cell may be a secondary battery, which refers to a battery cell that can continue to be used by activating the active material through charging after the battery cell is discharged. The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickelcadmium battery, a lead storage battery, and the like. This is not limited in the embodiments of the present disclosure.

It should also be noted that, in the embodiments of the present disclosure, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present disclosure can be interpreted according to specific conditions.

Judging from the trends in the market, the application of power batteries is becoming more and more widespread, and the types of power batteries are also increasing. Power batteries are not only applied in energy storage power systems such as hydropower, thermal power, wind power, and solar power stations, but also widely applied in electric transportation vehicles such as electric bicycles, electric motorcycles, or electric vehicles, as well as in military equipment, aerospace, and other fields. With the continuous expansion of the application field of power batteries, the market demand for power batteries is also constantly increasing.

In the related art, the battery production line mainly adopts semi-automated devices to implement processes such as battery processing, assembly, transportation, and detection. The battery production line usually uses a transfer apparatus to transfer a battery component from the previous process to the next process for processing, assembly, and the like. However, the transfer apparatus in the battery production line can only adapt to battery components of one specification and size, and cannot be compatible with a plurality of products of different specifications. During product changeover, precise positioning needs to be performed manually, and there is a risk of missed replacement and incorrect replacement at a placement position. In addition, manual replacement of the limiting block is time-consuming and labor-intensive, especially for storage at a storage position without a limiting block, manual storage is also required and the limiting block is pulled out from a warehouse, which requires a large amount of labor, resulting in low production efficiency and high costs.

In order to solve the above problem, the embodiments of the present disclosure provide a matching system and a corresponding control method. When a to-be-measured vehicle reaches a preset position, a controller can acquire current blueprint information of the to-be-measured vehicle and target blueprint information of the to-be-measured vehicle, where the target blueprint information has an association relationship with a specification parameter of a to-be-transferred component; then, in the case that the current blueprint information is inconsistent with the target blueprint information, the controller can control positional adjustment of at least one limiting block on a tray, such that the tray matches the to-be-transferred component, and the to-be-transferred component can be placed on the tray. Thus, in an aspect, the automatic selection of corresponding target blueprint information based on the to-be-transferred components with different specification parameters enhances data security; in another aspect, during the product matching process, the manual replacement of the limiting block is changed to the automatic replacement, and in addition, the changeover logic of the robot is simple and no additional sensors are required, such that the degree of automation of the device is improved while labor costs and production costs are reduced, thereby improving the production efficiency during product matching; in yet another aspect, by controlling the distance adjustment of the screw rod in the tray and performing gripping and placing actions on the at least one limiting block on the tray, coupled with the added storage function, the limiting blocks can adapt to the to-be-transferred components with different specification parameters, thereby improving the compatibility.

The embodiments of the present disclosure are described in detail below with reference to the drawings.

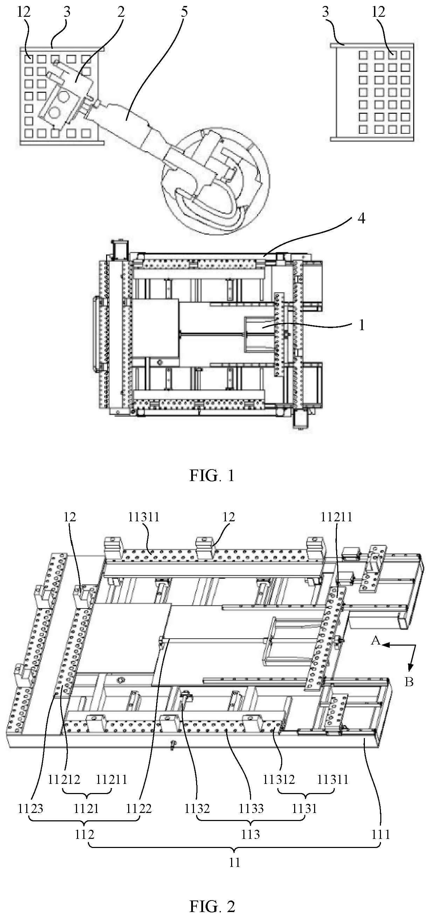

In an embodiment of the present disclosure, referring to FIGs. 1 and 2, FIG. 1 is a schematic diagram of a composition structure of a matching system according to an embodiment of the present disclosure, and FIG. 2 is a schematic diagram of a composition structure of a tray in a matching system according to an embodiment of the present disclosure. As shown in FIG. 1, the matching system includes: a to-be-measured vehicle 1, a robot 5, a storage mechanism 3, and a jacking mechanism 4; where the to-be-measured vehicle 1 includes a tray 11 and at least one limiting block 12 arranged on the tray 11, the tray 11 is configured for carrying a to-be-transferred component, and the at least one limiting block 12 is configured for limiting the position of the to-be-transferred component on the tray 11; a gripper mechanism 2 is arranged on a mechanical arm of the robot 5, and the robot 5 is configured for driving the gripper mechanism 2 to move; the storage mechanism 3 is arranged at a position corresponding to the robot 5, and the storage mechanism 3 is configured for storing the limiting block 12; the jacking mechanism 4 is arranged at a position corresponding to the robot 5, and the jacking mechanism 4 is configured for jacking and supporting the to-be-measured vehicle 1; where the gripper mechanism 2 can grip or release the limiting block 12 and, driven by the robot 5, can transport the limiting block 12 to a position corresponding to a to-be-placed position on the tray 11, or transport the limiting block 12 to a preset storage position in the storage mechanism 3.

In the embodiments of the present disclosure, the matching system may be configured for automatically adjusting the to-be-measured vehicle 1 carrying and transporting the to-be-transferred component, such that the to-be-measured vehicle 1 matches the to-be-transferred component, and the to-be-transferred component can be placed on the to-be-measured vehicle 1. The to-be-measured vehicle 1 may position and clamp the to-be-transferred component, thereby achieving the stable transportation of the to-be-transferred component. The to-be-transferred component may be a to-be-assembled battery pack, a lower case body of the battery pack, or other components. The to-be-measured vehicle 1 may be in a structural form including the tray 11. The limiting blocks 12 are arranged on the tray 11, and the to-be-transferred component may abut against the limiting blocks 12. The to-be-transferred component is supported and limited by the limiting blocks 12, such that the to-be-transferred component is at a fixed position on the tray 11.

The to-be-measured vehicle 1 may further be provided with a transport member, and the transport member may be a transport cart provided with a carrying frame and wheels, and the transport cart may travel on a road surface. For example, the transport cart may be a non-powered transport cart, and the non-powered transport cart may be towed by an automated guided vehicle (AGV), such that the to-be-transferred component carried on the to-be-measured vehicle 1 is transported to a required position. The transport cart may also adopt an AGV, and the tray 11 is arranged on the AGV. The specific structure of the to-be-measured vehicle 1 is not limited in the embodiments of the present disclosure.

In the embodiments of the present disclosure, in order to replace the limiting block 12 arranged on the tray 11, or to adjust the position of the limiting block 12 on the tray 11, a gripper mechanism 2 may be provided, and the limiting block 12 is gripped by the gripper mechanism 2. For example, the gripper mechanism 2 may be configured as a structure including two gripper rods, the gripper rods are capable of moving, and the limiting block 12 can be gripped or placed by the gripper rods. A connecting member that can be adapted to the mechanical arm of the robot 5 may be arranged in the gripper mechanism 2, so as to mount the gripper mechanism 2 on the mechanical arm of the robot 5 through the connecting member. For example, the robot 5 may be a six-axis robot, and the gripper mechanism 2 is driven by the six-axis robot to move, thereby completing the movement of the limiting block 12.

In the embodiments of the present disclosure, in the process of replacing or adjusting the limiting block 12 in the to-be-measured vehicle 1, the temporarily unused limiting block 12 needs to be placed at a preset position. The storage mechanism 3 may be provided, a plurality of storage portions may be arranged in the storage mechanism 3, and one limiting block 12 may be stored in each of the storage portions. The storage mechanism 3 is arranged at a position corresponding to the robot 5, and the robot 5 drives the gripper mechanism 2, such that the gripper mechanism 2 can reach positions each corresponding to one of the storage portions.

In the embodiments of the present disclosure, before the to-be-measured vehicle 1 is adjusted, that is, before the limiting block 12 on the to-be-measured vehicle 1 is adjusted, the position of the to-be-measured vehicle 1 needs to be limited, such that the to-be-measured vehicle 1 is at the preset position. In this case, the jacking mechanism 4 may be arranged at a position corresponding to the robot 5, and the jacking mechanism 4 may be configured in a structural form including a jacking support, a limiting assembly, and a jacking assembly. The jacking support may be configured for supporting and fixing the entire jacking mechanism 4, and the jacking mechanism 4 may be arranged at a position adjacent to the robot 5 through the jacking support; the limiting assembly is arranged on the jacking support, and the limiting assembly is configured to be capable of moving relative to the jacking support, and in the case that the to-be-measured vehicle 1 moves to the position where the jacking mechanism 4 is located, the limiting assembly is controlled to abut against the to-be-measured vehicle 1 after moving, such that the to-be-measured vehicle 1 may be limited to the position where the jacking mechanism 4 is located; the jacking assembly may be arranged on the jacking support, and the jacking assembly is configured as a structure capable of moving relative to the jacking support, and the to-be-measured vehicle 1 may be lifted by the jacking assembly, such that the to-be-measured vehicle 1 is lifted to a certain height.

It can be seen from the above embodiments that since the tray 11 is arranged in the to-be-measured vehicle 1, and the limiting blocks 12 are arranged on the tray 11, the to-be-transferred component can be carried by the tray 11, and the position of the to-be-transferred component on the tray 11 can be limited by the limiting block 12, so as to limit the to-be-transferred component; in addition, the gripper mechanism 2 is arranged on the mechanical arm of the robot 5, the robot 5 can drive the gripper mechanism 2 to move to a position corresponding to the limiting block 12, and the gripper mechanism 2 can grip or place the limiting block 12; moreover, the storage mechanism 3 is arranged at a position corresponding to the robot 5, and the to-be-used limiting block 12 can be stored in the storage mechanism 3; meanwhile, the jacking mechanism 4 is further arranged at a position corresponding to the robot 5, and the to-be-measured vehicle 1 can be jacked, supported, and limited by the jacking mechanism 4, such that the to-be-measured vehicle 1 can be parked at a preset position. In this way, after the to-be-measured vehicle 1 is stopped at the preset position by the jacking mechanism 4, the robot 5 can drive the gripper mechanism 2 to take away the limiting block 12 that needs to be replaced on the to-be-measured vehicle 1, and place the limiting block in the preset storage position in the storage mechanism 3; or the robot 5 can drive the gripper mechanism 2 to grip the required limiting block 12 from the storage mechanism 3, and mount the limiting block at the corresponding position on the tray 11, such that the adjustment of the to-be-measured vehicle 1 can be quickly and efficiently completed, and the to-be-measured vehicle 1 matches the to-be-transferred component that needs to be transferred. This enables the to-be-measured vehicle 1 to be compatible with the to-be-transferred components of different specification parameters, which is beneficial to improving the generation efficiency during product changeover.

In some embodiments, as shown in FIG. 2, the tray 11 includes a tray frame 111, a transverse clamping assembly 112, and a longitudinal clamping assembly 113. The transverse clamping assembly 112 includes a transverse clamping member 1121 and a transverse transmission member 1122. The transverse clamping member 1121 is slidably connected to the tray frame 111 and is provided with a transverse mounting part 1123, and the limiting block 12 can be connected to the transverse clamping member 1121 through the transverse mounting part 1123. The transverse transmission member 1122 is in transmission connection with the transverse clamping member 1121. In the movement process of the transverse transmission member 1122, the transverse clamping member 1121 can be driven to move in a first direction A. The longitudinal clamping assembly 113 includes a longitudinal clamping member 1131 and a longitudinal transmission member 1132. The longitudinal clamping member 1131 is slidably connected to the tray frame 111 and is provided with a longitudinal mounting part 1133. The limiting block 12 can be connected to the longitudinal clamping member 1131 through the longitudinal mounting part 1133. The longitudinal transmission member 1132 is in transmission connection with the longitudinal clamping member 1131. In the movement process of the longitudinal transmission member 1132, the longitudinal clamping member 1131 can be driven to move in a second direction B. The second direction B has an included angle with the first direction A.

In the embodiments of the present disclosure, the tray 11 is configured for carrying the to-be-transferred component, and the tray frame 111 may be arranged in the tray 11. For example, the tray frame 111 may be configured as a square frame structure, such that other components and parts in the tray 11 may be arranged on the square frame structure.

In the embodiments of the present disclosure, since the sizes and shapes of the to-be-transferred components transported by the to-be-measured vehicle 1 are different, the shape of the tray 11 needs to be adjusted when different to-be-transferred components are transported. In this way, the transverse clamping assembly 112 and the longitudinal clamping assembly 113 can be arranged in the tray 11. By adjusting the positions of the transverse clamping assembly 112 and the longitudinal clamping assembly 113 in the tray 11, the shape of the tray 11 can be changed, such that the tray 11 matches the to-be-transferred component.

Illustratively, the transverse clamping assembly 112 may be configured as a structure including a transverse clamping member 1121 and a transverse transmission member 1122. The transverse clamping member 1121 is slidably connected to the tray frame 111, and a transverse mounting part 1123 configured for mounting the limiting block 12 is arranged on the transverse clamping member 1121. The transverse transmission member 1122 is arranged on the tray frame 111, and the transverse transmission member 1122 is in transmission connection with the transverse clamping member 1121. In this case, in the movement process of the transverse transmission member 1122, the transverse clamping member 1121 may be driven to move in the first direction A relative to the tray frame 111. For example, the transverse clamping member 1121 is enabled to move in the length direction of the tray frame 111, such that the position of the transverse clamping member 1121 on the tray frame 111 can be adjusted.

For another example, the longitudinal clamping assembly 113 may be configured as a structure including a longitudinal clamping member 1131 and a longitudinal transmission member 1132. The longitudinal clamping member 1131 is slidably connected to the tray frame 111, and a longitudinal mounting part 1133 configured for mounting the limiting block 12 is arranged on the longitudinal clamping member 1131. The longitudinal transmission member 1132 is arranged on the tray frame 111, and the longitudinal transmission member 1132 is in transmission connection with the longitudinal clamping member 1131. In this case, in the movement process of the longitudinal transmission member 1132, the longitudinal clamping member 1131 may be driven to move in the second direction B relative to the tray frame 111. For example, the longitudinal clamping member 1131 is enabled to move in the width direction of the tray frame 111, such that the position of the longitudinal clamping member 1131 on the tray frame 111 can be adjusted. In the case that the tray frame 111 is configured as a rectangular structure, the first direction A and the second direction B are respectively consistent with the length direction and the width direction of the rectangular tray frame 111. In other words, the first direction A and the second direction B are in a same plane and are perpendicular to each other.

It can be seen from the above embodiments that since the tray frame 111 is arranged in the tray 11, other components and parts in the tray 11 can be carried and mounted by the tray frame 111; in addition, the tray frame 111 is provided with the transverse clamping member 1121 and the transverse transmission member 1122 which are in transmission connection, and the position of the transverse clamping member 1121 on the tray frame 111 can be adjusted by the transverse transmission member 1122; meanwhile, the tray frame 111 is provided with the longitudinal clamping member 1131 and the longitudinal transmission member 1132 which are in transmission connection, and the position of the longitudinal clamping member 1131 on the tray frame 111 can be adjusted by the longitudinal transmission member 1132, such that the size and shape of the tray 11 can be adjusted in at least two directions, and then the tray 11 can match the to-be-transferred component.

In some embodiments, as shown in FIG. 2, the longitudinal clamping member 1131 includes a first longitudinal clamping member 11311 and a second longitudinal clamping member 11312, and the first longitudinal clamping member 11311 and the second longitudinal clamping member 11312 are both in transmission connection with the longitudinal transmission member 1132; in the movement process of the longitudinal transmission member 1132, the first longitudinal clamping member 11311 and the second longitudinal clamping member 11312 can be driven to move toward or away from each other, such that the first longitudinal clamping member 11311 and the second longitudinal clamping member 11312 cooperatively fix the to-be-transferred component.

In the embodiments of the present disclosure, the longitudinal clamping member 1131 may be configured as a structure including a first longitudinal clamping member 11311 and a second longitudinal clamping member 11312. Two guide rails extending in the second direction B may be fixedly mounted on the tray frame 111, and adaptive sliders are arranged on the guide rails. The first longitudinal clamping member 11311 may be fixedly connected to the sliders on the two guide rails, separately, so as to slidably mount the first longitudinal clamping member 11311 on the tray frame 111. The second longitudinal clamping member 11312 may be fixedly connected to other sliders on the two guide rails, separately, so as to slidably mount the second longitudinal clamping member 11312 on the tray frame 111. Both the first longitudinal clamping member 11311 and the second longitudinal clamping member 11312 extend in the first direction A.

Illustratively, the longitudinal transmission member 1132 may adopt a screw rod, and two segments of threads with opposite spiral directions are arranged on the screw rod. Nuts respectively matching the two segments of threads with the opposite spiral directions may be arranged on the first longitudinal clamping member 11311 and the second longitudinal clamping member 11312, respectively. In this case, the first longitudinal clamping member 11311 and the second longitudinal clamping member 11312 may be separately connected to the screw rod in a threaded connection manner. In this way, in the rotation process of the screw rod, the first longitudinal clamping member 11311 and the second longitudinal clamping member 11312 may be driven to simultaneously move toward each other, such that the first longitudinal clamping member 11311 and the second longitudinal clamping member 11312 move toward each other; or the first longitudinal clamping member 11311 and the second longitudinal clamping member 11312 may be driven to simultaneously move away from each other, such that the first longitudinal clamping member 11311 and the second longitudinal clamping member 11312 move away from each other.

It can be seen from the above embodiments that since the longitudinal clamping member 1131 is configured as a structure including the first longitudinal clamping member 11311 and the second longitudinal clamping member 11312, and the first longitudinal clamping member 11311 and the second longitudinal clamping member 11312 are both in transmission connection with the longitudinal transmission member 1132, the longitudinal transmission member 1132 may drive the first longitudinal clamping member 11311 and the second longitudinal clamping member 11312 to synchronously move toward or away from each other, such that the distance between the first longitudinal clamping member 11311 and the second longitudinal clamping member 11312 can be conveniently adjusted, and the distance between the first longitudinal clamping member 11311 and the second longitudinal clamping member 11312 matches the width of the to-be-transferred component in the second direction B.

In some embodiments, as shown in FIG. 2, the first longitudinal clamping member 11311 includes a first changeover plate and at least one first limiting block arranged on the first changeover plate; the second longitudinal clamping member 11312 includes a second changeover plate and at least one second limiting block arranged on the second changeover plate; where a plurality of longitudinal mounting parts 1133 are arranged on both the first changeover plate and the second changeover plate at intervals, longitudinal connecting parts are arranged at the bottoms of both the first limiting block and the second limiting block, and the longitudinal mounting parts are detachably connected to the longitudinal connecting parts.

In the embodiments of the present disclosure, the first longitudinal clamping member 11311 may be configured as a structure including a first changeover plate and a first limiting block, and the second longitudinal clamping member 11312 may be configured as a structure including a second changeover plate and a second limiting block. The first changeover plate and the second changeover plate are both slidably connected to the tray frame 111. A plurality of longitudinal mounting parts 1133 are arranged on both the first changeover plate and the second changeover plate, and longitudinal connecting parts adapted to the longitudinal mounting parts 1133 are arranged on both the first limiting block and the second limiting block, such that the first limiting block is detachably mounted on the first changeover plate, and the second limiting block is detachably mounted on the second changeover plate.

Illustratively, both the first changeover plate and the second changeover plate may be configured as elongated plate-shaped structures. A plurality of mounting holes may be formed in each of the first and second plate-shaped changeover plates. For example, two rows of mounting holes disposed in parallel along the length direction of the changeover plate may be provided, and any one of the two rows of mounting holes is taken as a longitudinal mounting part. Illustratively, each longitudinal mounting part may include two mounting holes.

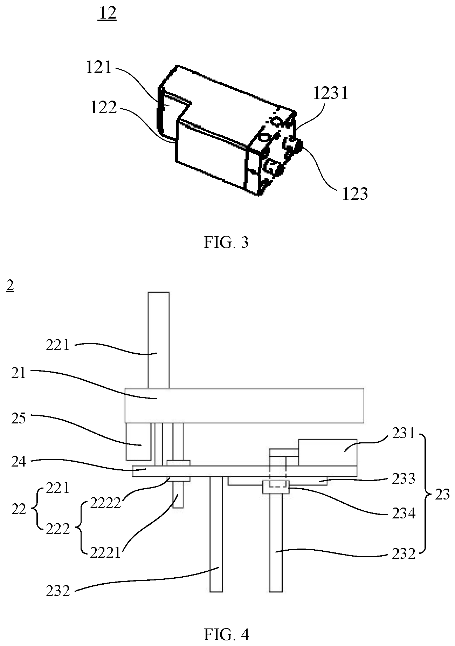

For another example, both the first limiting block and the second limiting block may be configured as block structures in a step shape. A plurality of connecting posts may be arranged at the bottom of the block structure in a step shape. Referring to FIG. 3, a three-dimensional schematic structural diagram of one limiting block 12 in a matching system according to an embodiment of the present disclosure from one perspective is shown. As shown in FIG. 3, the limiting block 12 includes a step structure 121 and a step surface 122 configured for supporting the to-be-transferred component. In addition, two connecting posts 123 are arranged at the bottom of the limiting block 12. The outer surface of the connecting post 123 is provided with a clamping protrusion 1231, and the inner peripheral surface of the mounting hole is provided with a clamping groove. When the connecting post 123 is inserted into the mounting hole, the clamping protrusion 1231 is in snap-fit connection with the clamping groove.

Illustratively, two connecting posts 123 at the bottom of the limiting block 12 may be adapted to the longitudinal mounting part 1133 including two mounting holes. Specifically, two connecting posts serving as the longitudinal connecting part may be arranged at the bottoms of the first limiting block and the second limiting block, and the two connecting posts respectively match the two mounting holes. Therefore, the two connecting posts may be inserted into the two mounting holes, respectively, such that the first limiting block and the second limiting block are detachably mounted on the first changeover plate and the second changeover plate, respectively.

It can be seen from the above embodiments that since the first changeover plate and the first limiting block are arranged in the first longitudinal clamping member 11311, the second changeover plate and the second limiting block are arranged in the second longitudinal clamping member 11312, and the plurality of longitudinal mounting parts 1133 are separately arranged on the first changeover plate and the second changeover plate, the first limiting blocks and the second limiting blocks may be separately arranged at different positions on the first changeover plate and the second changeover plate, such that the longitudinal clamping member 1131 can match the to-be-transferred components of different sizes; in addition, the longitudinal mounting part 1133 and the longitudinal connecting part are configured as detachable connection structures, so as to facilitate the replacement or positional adjustment of the first limiting block and the second limiting block.

In some embodiments, as shown in FIG. 2, the transverse clamping member 1121 includes a first transverse clamping member 11211 and a second transverse clamping member 11212 arranged opposite to each other, the first transverse clamping member 11211 is in transmission connection with the transverse transmission member 1122, and the second transverse clamping member 11212 is fixed to the tray frame 111. In the movement process of the transverse transmission member 1122, the first transverse clamping member 11211 can be driven to move in a direction close to or away from the second transverse clamping member 11212, such that the first transverse clamping member 11211 and the second transverse clamping member 11212 cooperatively clamp the to-be-transferred component.

In the embodiments of the present disclosure, the transverse clamping member 1121 may be configured as a structure including a first transverse clamping member 11211 and a second transverse clamping member 11212. Two guide rails extending in the first direction A may be fixedly mounted on the tray frame 111, and adaptive sliders are arranged on the guide rails. The first transverse clamping member 11211 may be fixedly connected to the sliders on the two guide rails, separately, so as to slidably mount the first transverse clamping member 11211 on the tray frame 111. The second transverse clamping member 11212 may be fixedly mounted on the tray frame 111. Both the first transverse clamping member 11211 and the second transverse clamping member 11212 extend in the second direction B.

Illustratively, the transverse transmission member 1122 may adopt a screw rod, and a nut that matches a thread on the screw rod may be arranged on the first transverse clamping member 11211. In this case, the first transverse clamping member 11211 may be connected to the screw rod in a threaded connection manner. In this way, in the rotation process of the screw rod, the first transverse clamping member 11211 may be driven to move in a direction close to the second transverse clamping member 11212, or the first transverse clamping member 11211 may be driven to move in a direction away from the second transverse clamping member 11212.

It can be seen from the above embodiments that since the transverse clamping member 1121 is configured as a structure including the first transverse clamping member 11211 and the second transverse clamping member 11212, and the first transverse clamping member 11211 is in transmission connection with the transverse transmission member 1122, the transverse transmission member 1122 may drive the first transverse clamping member 11211 to move in a direction close to or away from the second transverse clamping member 11212, such that the distance between the first transverse clamping member 11211 and the second transverse clamping member 11212 can be conveniently adjusted, and the distance between the first transverse clamping member 11211 and the second transverse clamping member 11212 matches the length of the to-be-transferred component in the first direction A.

In some embodiments, as shown in FIG. 2, the first transverse clamping member 11211 includes a third changeover plate and at least one third limiting block arranged on the third changeover plate; the second transverse clamping member 11212 includes a fourth changeover plate and at least one fourth limiting block arranged on the fourth changeover plate; where a plurality of transverse mounting parts 1123 are arranged on both the third changeover plate and the fourth changeover plate at intervals, transverse connecting parts are arranged at the bottoms of the third limiting block and the fourth limiting block, and the transverse mounting parts 1123 are detachably connected to the transverse connecting parts.

In the embodiments of the present disclosure, the first transverse clamping member 11211 may be configured as a structure including a third changeover plate and a third limiting block, and the second transverse clamping member 11212 may be configured as a structure including a fourth changeover plate and a fourth limiting block. The third changeover plate is slidably connected to the tray frame 111, and the fourth changeover plate is fixed to the tray frame 111. A plurality of transverse mounting parts 1123 are arranged on both the third changeover plate and the fourth changeover plate, and transverse connecting parts adapted to the transverse mounting parts 1123 are arranged on both the third limiting block and the fourth limiting block, such that the third limiting block is detachably mounted on the third changeover plate, and the fourth limiting block is detachably mounted on the fourth changeover plate.

Illustratively, both the third changeover plate and the fourth changeover plate may be configured as elongated plate-shaped structures. A plurality of mounting holes may be formed in each of the third and fourth plate-shaped changeover plates. For example, two rows of mounting holes disposed in parallel along the length direction of the changeover plate may be provided, and any one of the two rows of mounting holes is taken as a transverse mounting part 1123. Illustratively, each transverse mounting part 1123 may include two mounting holes.

For another example, both the third limiting block and the fourth limiting block may be configured as block structures in a step shape. A plurality of connecting posts may be arranged at the bottom of the block structure in a step shape. For example, matching the transverse mounting part 1123 including two mounting holes, two connecting posts serving as the transverse connecting part may be arranged at the bottoms of the third limiting block and the fourth limiting block, and the two connecting posts respectively match the two mounting holes. In addition, as shown in FIG. 3, the outer surface of the connecting post may be provided with a clamping protrusion, and the inner peripheral surface of the mounting hole is provided with a clamping groove. When the connecting post is inserted into the mounting hole, the clamping protrusion is in snap-fit connection with the clamping groove. Therefore, the two connecting posts may be inserted into the two mounting holes, respectively, such that the third limiting block and the fourth limiting block are detachably mounted on the third changeover plate and the fourth changeover plate, respectively.

It can be seen from the above embodiments that since the third changeover plate and the third limiting block are arranged in the first transverse clamping member 11211, the fourth changeover plate and the fourth limiting block are arranged in the second transverse clamping member 11212, and the plurality of transverse mounting parts 1123 are separately arranged on the third changeover plate and the fourth changeover plate, the third limiting blocks and the fourth limiting blocks may be separately arranged at different positions on the third changeover plate and the fourth changeover plate, such that the transverse clamping member 1121 can match the to-be-transferred components of different sizes; in addition, the transverse mounting part 1123 and the transverse connecting part are configured as detachable connection structures, so as to facilitate the replacement or positional adjustment of the third limiting block and the fourth limiting block.

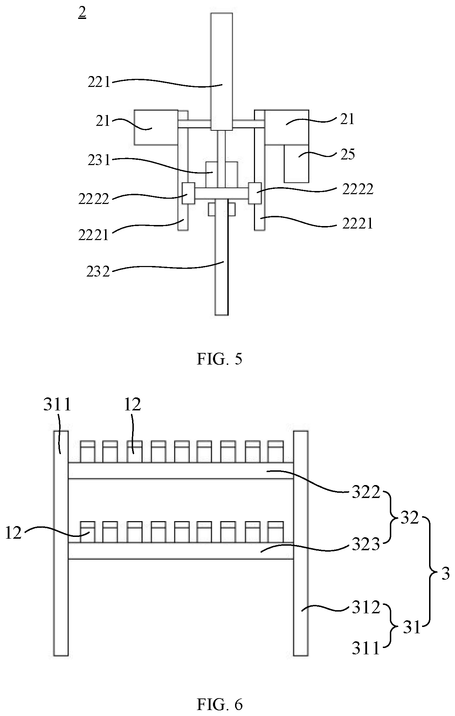

In some embodiments, referring to FIGs. 4 and 5, both FIG. 4 and FIG. 5 show schematic diagrams of composition structures of a gripper mechanism 2 in a matching system according to an embodiment of the present disclosure. The gripper mechanism 2 includes: a connecting member 21, a moving assembly 22, and a gripper assembly 23. The gripper mechanism 2 is arranged on the mechanical arm of the robot 5 through the connecting member 21; the moving assembly 22 is arranged on the connecting member 21; the gripper assembly 23 is arranged on the moving assembly 22; driven by the moving assembly 22, the gripper assembly 23 is movable in a direction close to or away from the to-be-placed position.

In the embodiments of the present disclosure, in order to facilitate the mounting of the gripper mechanism 2 on the mechanical arm of the robot 5, a connecting member 21 may be provided. Other components and parts on the gripper mechanism 2 may be mounted on the connecting member 21, and the gripper mechanism 2 is mounted on the mechanical arm through the connecting member 21.

In the embodiments of the present disclosure, a gripper assembly 23 is arranged in the gripper mechanism 2, and the limiting block 12 may be gripped or the limiting block 12 may be released by the gripper assembly 23. In the process of gripping the limiting block 12 by the gripper mechanism 2, the gripper assembly 23 needs to move in a direction close to the limiting block 12. After the limiting block 12 is released, the gripper assembly 23 needs to move in a direction away from the limiting block 12. In this case, the moving assembly 22 may be arranged, the moving assembly 22 is mounted on the connecting member 21, and the moving assembly 22 is movable; the gripper assembly 23 is mounted on the moving assembly 22, and the gripper assembly 23 may be driven by the moving assembly 22 to move in a direction close to or away from the limiting block 12, or may move toward or away from the to-be-placed position where the limiting block 12 is placed.

It can be seen from the above embodiments that since the connecting member 21 is arranged in the gripper mechanism 2, the gripper mechanism 2 may be mounted on the mechanical arm through the connecting member 21; in addition, the moving assembly 22 is arranged on the connecting member 21, and the gripper assembly 23 is arranged on the moving assembly 22; the moving assembly 22 may drive the gripper assembly 23 to move to a required position, such that the gripper assembly 23 is close to the limiting block 12 or away from the limiting block 12, or the gripper assembly 23 is close to or away from the to-be-placed position.

In some embodiments, as shown in FIGs. 4 and 5, the moving assembly 22 includes a vertical driving member 221 and a vertical sliding assembly 222; the vertical sliding assembly 222 is arranged on the connecting member 21, and the gripper assembly 23 is arranged on the vertical sliding assembly 222; one end of the vertical driving member 221 is connected to the connecting member 21, and the other end of the vertical driving member is connected to the gripper assembly 23; driven by the vertical driving member 221, the gripper assembly 23 is movable in an extension direction of the vertical sliding assembly 222.

In the embodiments of the present disclosure, a vertical sliding assembly 222 and a vertical driving member 221 may be provided. The vertical sliding assembly 222 limits the movement trajectory of the gripper assembly 23, and the vertical driving member 221 drives the gripper assembly 23 to move.

Illustratively, the vertical sliding assembly 222 may be configured as a structure including a vertical guide rail 2221 and a vertical slider 2222. For example, the vertical guide rail 2221 is fixedly mounted on the connecting member 21, and the vertical slider 2222 adapted to the vertical guide rail 2221 is slidably connected to the vertical guide rail 2221. A moving plate 24 may be arranged on the vertical slider 2222, and the gripper assembly 23 may be mounted on the moving plate 24 to arrange the gripper assembly 23 on the vertical sliding assembly 222.

For another example, the vertical driving member 221 may be configured as a structure including a servo motor, a screw rod, and a nut. The servo motor is fixed to the connecting member 21, the screw rod is connected to an output shaft of the servo motor, the nut is mounted on the moving plate 24, and the nut is in threaded connection with the screw rod. Thus, the vertical driving member 221 may be connected to the gripper assembly 23.

It can be seen from the above embodiments that since the vertical sliding assembly 222 is provided and the gripper assembly 23 is connected to the vertical sliding assembly 222, the gripper assembly 23 is movable in the extension direction of the vertical sliding assembly 222; in addition, the vertical driving member 221 is provided, the vertical driving member 221 is connected to the gripper assembly 23, and the gripper assembly 23 can be driven by the vertical driving member 221 to move in the extension direction of the vertical sliding assembly 222, such that the gripper assembly 23 is movable to a required position.

In some embodiments, as shown in FIGs. 4 and 5, the gripper assembly 23 includes a gripper driving member 231 and at least two gripper members 232. One of the at least two gripper members 232 is slidably arranged on the moving assembly 22, one end of the gripper driving member 231 is connected to the moving assembly 22, and the other end of the gripper driving member is connected to the gripper member 232 slidably arranged on the moving assembly 22. Driven by the gripper driving member 231, the at least two gripper members 232 are movable toward each other to grip the limiting block 12, or the at least two gripper members 232 are movable away from each other to release the limiting block 12.

In the embodiments of the present disclosure, when the gripper assembly 23 needs to grip or release the limiting block 12, a movable part needs to be provided to grip the limiting block 12 or release the limiting block 12.

Illustratively, two gripper members 232 may be provided, and the gripper members 232 may be configured as gripper plate. One gripper member 232 is fixed to the moving plate 24, and the other gripper member 232 is slidably arranged on the moving plate 24, such that the two gripper members 232 are arranged on the moving assembly 22. For example, a gripper guide rail 233 may be arranged on the moving plate 24, an adapted gripper slider 234 may be arranged on the gripper guide rail 233, and another gripper member 232 may be fixed to the gripper slider 234.

For another example, the gripper driving member 231 may adopt a driving cylinder, a cylinder barrel of the driving cylinder is connected to the moving plate 24, and a piston rod of the driving cylinder is connected to the gripper slider 234, so as to connect the gripper driving member 231 to the slidable gripper member 232. In this way, driven by the driving cylinder, the gripper member 232 that is slidable relative to the moving assembly 22 is movable toward or away from the gripper member 232 fixed to the moving assembly 22, so as to grip the limiting block 12 or release the limiting block 12.

It can be seen from the above embodiments that since at least two gripper members 232 are provided and one gripper member 232 is slidably arranged on the moving assembly 22, the gripper driving member 231 is connected to the slidable gripper member 232, and the slidable gripper member 232 may be driven by the gripper driving member 231 to move, such that the two gripper members 232 move toward or away from each other, thereby gripping the limiting block 12 or releasing the limiting block 12.

In some embodiments, as shown in FIGs. 4 and 5, a visual detection system 25 may further be arranged in the gripper mechanism 2. The visual detection system 25 can be electrically coupled to a controller, and the visual detection system 25 is configured for photographing a to-be-gripped position and the to-be-placed position and performing offset compensation on positions of the to-be-gripped position and the to-be-placed position.

In the embodiments of the present disclosure, in the process of performing replacement or positional adjustment of the limiting block 12 on the tray 11 through the gripper assembly 23 in the gripper mechanism 2, it is necessary to determine whether the position of the gripper assembly 23 is accurate. In this case, the visual detection system 25 may be arranged in the gripper mechanism 2, and an accurate target position of the position to which the gripper assembly 23 is to be moved is determined through the visual detection system 25. The visual detection system 25 may be connected to a controller in a wired or wireless manner. The controller may be a lower computer in a production line, for example, a programmable logic controller (PLC), or a computer device that can be configured for controlling the movement of all components and parts.

Illustratively, the visual detection system 25 may be configured as a structure including a charge coupled device (CCD) camera. The CCD camera may be used to photograph the to-be-gripped position where the limiting block 12 is located, and the first offset of the to-be-gripped position is calculated and determined by using the acquired image of the to-be-gripped position, such that the offset compensation may be performed on the to-be-gripped position according to the first offset. That is, the target position of the to-be-gripped position may be determined based on the first offset and the to-be-gripped position, and then the robot 5 may be controlled to move to drive the gripper assembly 23 in the gripper mechanism 2 to move to the target position of the to-be-gripped position. Alternatively, the to-be-placed position of the limiting block 12 may be photographed by using the CCD camera, and the second offset of the position where the limiting block 12 is to be placed is calculated and determined by using the acquired image of the to-be-placed position, such that the offset compensation may be performed on the to-be-placed position according to the second offset. That is, the target position of the to-be-placed position may be determined based on the second offset and the to-be-placed position, and then the robot 5 may be controlled to move to drive the gripper assembly 23 in the gripper mechanism 2 to move to the target position of the to-be-placed position.

It can be seen from the above embodiments that since the visual detection system 25 is arranged on the gripper mechanism 2, the positions of the to-be-gripped position and the to-be-placed position can be visually guided and corrected by the visual detection system 25, and the information of the target position to be reached by the gripper assembly 23 in the gripper mechanism 2 can be accurately determined based on the corresponding offset data, such that the gripper assembly 23 can be controlled to move to the target position according to the determined target position, and then the gripper assembly 23 is enabled to move to the accurate gripping position or placement position to improve the efficiency of performing replacement or positional adjustment of the limiting block 12 on the tray 11.

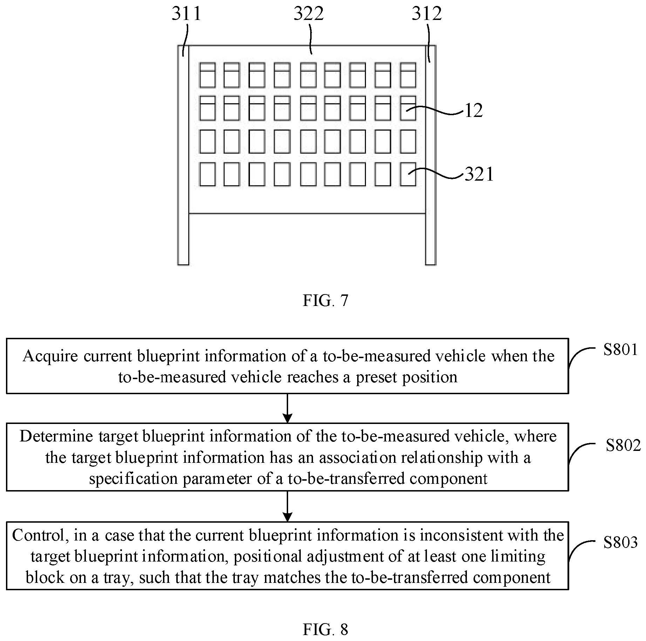

In some embodiments, referring to FIGs. 6 and 7, both FIG. 6 and FIG. 7 are schematic diagrams of composition structures of a storage mechanism in a matching system according to an embodiment of the present disclosure. The storage mechanism 3 includes a supporting assembly 31 and a carrying assembly 32. The carrying assembly 32 is slidably arranged on the supporting assembly 31, the carrying assembly 32 is provided with a storage portion 321 adapted to the limiting block 12, and the supporting assembly 31 is configured for supporting the carrying assembly 32.

In the embodiments of the present disclosure, the storage mechanism 3 is configured for storing a to-be-used limiting block 12, the supporting assembly 31 may be provided to support an overall structure of the storage mechanism 3, and the storage mechanism 3 is arranged at a position corresponding to the robot 5 through the supporting assembly 31. Due to the large number of the limiting blocks 12, the shapes of the limiting blocks 12 may also be different. The carrying assembly 32 may be arranged in the storage mechanism 3, and the limiting blocks 12 are placed by the carrying assembly 32. The carrying assembly 32 may be slidably arranged on the supporting assembly 31. In this way, in the case that the limiting blocks 12 on a group of carrying assemblies 32 need to be gripped, the group of carrying assemblies 32 may be slid to a preset position, such that the gripper assembly 23 grips the limiting block 12.

In the embodiments of the present disclosure, the carrying assembly 32 may be provided with storage portions 321 adapted to the limiting blocks 12, and the limiting blocks 12 may be placed in the corresponding storage portions 321. Illustratively, the storage portion 321 may be configured as a structure adapted to the connecting part on the limiting block 12. For example, in the case that the connecting part on the limiting block 12 includes two connecting posts, the storage portion 321 may be configured in a structural form including two storage holes adapted to the two connecting posts. In this way, each limiting block 12 can be placed at a determined position in the storage mechanism 3.

It can be seen from the above embodiments that since the carrying assembly 32 is slidably arranged on the supporting assembly 31, the to-be-used carrying assembly 32 is slidable to a preset position as required, such that the gripper mechanism 2 can grip or place the limiting block 12; in addition, the carrying assembly 32 is provided with the storage portions 321, each limiting block 12 can be placed in the corresponding storage portion 321, and the limiting block 12 can be limited by the storage portion 321, such that the limiting block 12 is stored at a determined position, which can also facilitate the gripper mechanism 2 to grip or place the limiting block 12.

In some embodiments, as shown in FIGs. 6 and 7, the supporting assembly 31 includes two supports arranged opposite to each other, the carrying assembly 32 includes a plurality of carrying plates, the carrying plates are provided with the storage portions 321, and each carrying plate is slidably arranged between the two supports.

In the embodiments of the present disclosure, the supporting assembly 31 may be configured as a structure including a first support 311 and a second support 312. The first support 311 and the second support 312 are arranged opposite to each other, and the carrying assembly 32 may be supported between the first support 311 and the second support 312. The carrying assembly 32 may be configured in a structural form including a plurality of carrying plates. For example, two carrying plates are provided, the first carrying plate 322 and the second carrying plate 323 are arranged parallel to each other between the two supports, and each carrying plate is slidably arranged on the two supports. For example, the two carrying plates may be slidably arranged on the support by using slide rails.

It can be seen from the above embodiments that the supporting assembly 31 is configured as a structure including two supports, which can provide stable support for the carrying assembly 32; meanwhile, the plurality of carrying plates are slidably arranged between the two supports, such that different carrying plates can be at different positions to facilitate the gripping and placement of the limiting blocks 12 on the carrying plates.

In another embodiment of the present disclosure, referring to FIG. 8, a schematic flowchart of a matching control method according to an embodiment of the present disclosure is shown. As shown in FIG. 8, the method may include the following steps.

In S801, current blueprint information of a to-be-measured vehicle is acquired when the to-be-measured vehicle reaches a preset position.

It should be noted that, in the embodiment of the present disclosure, the method is applicable to a controller. The controller may be a lower computer PLC in the production line. Matching between the to-be-measured vehicle and the to-be-transferred component is implemented by using the PLC, such that labor costs and production costs can be reduced, and the production efficiency is higher.

It should also be noted that, in the embodiment of the present disclosure, a tray is placed on the upper surface of the to-be-measured vehicle, and the tray is configured for carrying the to-be-transferred component. The to-be-measured vehicle, as a transfer apparatus, can transfer a component from the previous process to the next process for processing, assembly, and the like.

It should also be noted that, in the embodiment of the present disclosure, at least one limiting block is arranged on the tray, and the at least one limiting block is configured for limiting the position of the to-be-transferred component on the tray. Here, the to-be-transferred component may be a battery pack (Pack), a case body (specifically, a lower case body) of the pack, or other components, so the to-be-measured vehicle may also be referred to as a "Pack vehicle".

It should also be noted that, in the embodiment of the present disclosure, the to-be-measured vehicle may be towed by an automated guided vehicle to move. The automated guided vehicle sends a docking request to a controller; after the controller grants docking permission, it sends a docking authorization command to the automated guided vehicle. Based on this command, the automated guided vehicle can tow the to-be-measured vehicle into a changeover station.

It should also be noted that, in the changeover station, the automated guided vehicle travels along a predetermined route and is provided with a sensing sheet at a preset position. When the automated guided vehicle tows the to-be-measured vehicle to move to the preset position, a sensing apparatus of the body of the to-be-measured vehicle will receive a signal sent by the sensing sheet, which means that the automated guided vehicle is in place, that is, the to-be-measured vehicle reaches the preset position.

In some embodiments, an electronic tag is further arranged on the to-be-measured vehicle. Acquiring the current blueprint information of the to-be-measured vehicle may include: after the to-be-measured vehicle reaches the preset position, reading blueprint information in the electronic tag through a reader/writer, so as to obtain the current blueprint information of the to-be-measured vehicle.

Here, the electronic tag may be a radio frequency identification (RFID) chip, which is specifically placed on the lower surface of the tray. In this way, after the to-be-measured vehicle reaches the preset position, the controller may identify the electronic tag to read the current blueprint information of the to-be-measured vehicle.

In S802, target blueprint information of the to-be-measured vehicle is determined, where the target blueprint information has an association relationship with a specification parameter of the to-be-transferred component.

It should be noted that, in the embodiments of the present disclosure, the target blueprint information may be sent to the controller by a manufacturing execution system (MES). The MES system is deployed in an upper computer or a server.

Herein, the MES system is configured for acquiring output information of a plurality of production devices, where the output information includes output time of a plurality of products output by the production devices and identifiers used to indicate whether the plurality of products are qualified. The MES system includes the monitoring of the production process, and the monitoring of the production process of the MES system focuses on the monitoring of the material conveying and quality indicators between the production process and the technological process. It is based on the real-time data of the production process, and uses the configuration technology of the MES system to achieve the real-time monitoring of the production progress, process quality, and material consumption of the production areas such as production workshop, power energy workshop, auxiliary material warehouse, and finished product warehouse. When the production process monitoring system finds an abnormality, an alarm may be given according to the preset settings. It helps a production command and scheduling department of an enterprise to carry out production coordination and reasonable scheduling, and thus improves the rapid response capability of production. In addition, on the basis of production process monitoring, the MES system organizes and coordinates production according to the production process characteristics of various industries, tracks production process data, and assesses various production indicators; and optimizes the production process through data analysis, so as to achieve the compilation and tracking of plans, the analysis of production data, assessment management, and the like. Managers can grasp the input and output of the whole plant in real time, and optimize decision-making production, so as to minimize production time, reduce errors, and reduce costs related to manual and repeated data entry. The main functions include subsystems such as production plan management, production organization, workshop assessment and personnel management, and production data analysis.

It should also be noted that, in the embodiments of the present disclosure, determining the target blueprint information of the to-be-measured vehicle may include: receiving first blueprint information sent by the manufacturing execution system; and then taking the first blueprint information as the target blueprint information of the to-be-measured vehicle. Alternatively, in the embodiments of the present disclosure, determining the target blueprint information of the to-be-measured vehicle may include: determining second blueprint information of the to-be-measured vehicle according to the specification parameter of the to-be-transferred component; and then taking the second blueprint information as the target blueprint information of the to-be-measured vehicle.

That is to say, in order to adapt to the specification parameter of the to-be-transferred component, the target blueprint information may be manually selected according to the specification parameter, or the target blueprint information may be automatically issued by the MES system, which is not limited herein.

Further, in some embodiments, the method further includes: matching the first blueprint information with the second blueprint information; and determining, in the case that the first blueprint information is consistent with the second blueprint information, that the manufacturing execution system successfully issues the first blueprint information.

In the embodiments of the present disclosure, consistency matching may also be performed on the first blueprint information and the second blueprint information to determine whether the MES system successfully issues the target blueprint information, which may also play a fool-proofing role and prevent the MES system from issuing wrong blueprint information.

It can be understood that, in the embodiments of the present disclosure, the blueprint information may also be referred to as a formula. In the matching process of the to-be-transferred component, corresponding formulas may be automatically selected according to the to-be-transferred components with different specification parameters, so as to match the to-be-measured vehicle and the to-be-transferred component. For the target blueprint information, the method further includes: constructing, in advance, the target blueprint information according to the specification parameter of the to-be-transferred component.

In some embodiments, constructing, in advance, the target blueprint information according to the specification parameter of the to-be-transferred component may include: determining, according to the specification parameter of the to-be-transferred component, at least one changeover plate for supporting the to-be-transferred component and the limiting blocks on the at least one changeover plate; and determining, according to the limiting blocks on the at least one changeover plate, hole position serial numbers of the limiting blocks on the at least one changeover plate, and correspondingly writing the hole position serial numbers into positions of the limiting blocks on the at least one changeover plate in the target blueprint information.

In the embodiments of the present disclosure, the target blueprint information includes at least one of the following parameters: a blueprint number, a blueprint name, a changeover plate number, a position of a limiting block, and an axial positioning position. The axial positioning position may include an X-axis positioning position and a Y-axis positioning position.

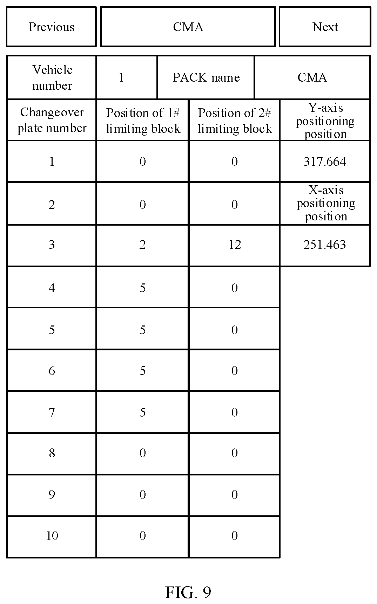

It should also be noted that the target blueprint information is taken as a formula, and the embodiments of the present disclosure may define the formula. Illustratively, FIG. 9 provides a schematic formula. In FIG. 9, a corresponding blueprint name, a vehicle number, a PACK name, a changeover plate number, a position of a 1# limiting block, a position of a 2# limiting block, an X-axis positioning position, and a Y-axis positioning position may be written and displayed.

It should be noted that, in the target blueprint information, the position of the limiting block represents a hole position serial number of the limiting block on the corresponding changeover plate. Taking FIG. 9 as an example, each changeover plate may include at most positions of two limiting blocks, such as the positions of the 1# limiting block and the 2# limiting block. However, each changeover plate may also include positions of two or more limiting blocks, which are specifically set according to the actual situation and are not limited herein.

It should also be noted that, in FIG. 9, the vehicle number is 1, the blueprint name may be CMA, and the PACK name is CMA. In the case that the changeover plate number is 3, two limiting blocks are placed on the changeover plate, and the positions of the two limiting blocks mean that the hole position serial number is 2 and the hole position serial number is 12, respectively. By clicking the "previous" or "next" button, formula switching may be performed. In this way, the position of the limiting block required by the corresponding blueprint information may be subsequently written into the formula shown in FIG. 9 based on different blueprint information and differences of the to-be-transferred components, thereby obtaining the formula corresponding to the to-be-transferred component of this specification parameter.

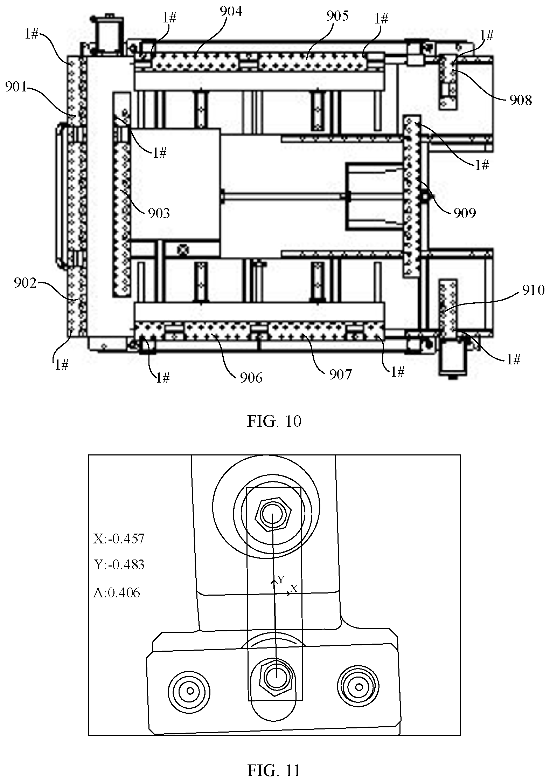

Illustratively, it is assumed that ten changeover plates are arranged on the tray. Referring to FIG. 10, ten changeover plates are disposed around the tray. The ten changeover plates are respectively a No. 1 changeover plate 901, a No. 2 changeover plate 902, a No. 3 changeover plate 903, a No. 4 changeover plate 904, a No. 5 changeover plate 905, a No. 6 changeover plate 906, a No. 7 changeover plate 907, a No. 8 changeover plate 908, a No. 9 changeover plate 909, and a No. 10 changeover plate 910. Specific positions are shown in FIG. 10. In addition, a No. 1 hole position (represented by "1#") of each changeover plate is also identified in FIG. 10, so as to determine a position sequence of the limiting blocks of each changeover plate.

It should also be noted that, in FIG. 9, the X-axis positioning position is 251.463, and the Y-axis positioning position is 317.664. Based on FIG. 10, the X-axis positioning position indicates a distance between the No. 1 changeover plate 901, the No. 2 changeover plate 902, or the No. 3 changeover plate 903 and the No. 9 changeover plate 909, and may be specifically changed by rotating the transverse transmission member with an electric driver head. The Y-axis positioning position indicates a distance between the No. 4 changeover plate 904 or the No. 5 changeover plate 905 and the No. 6 changeover plate 906 or the No. 7 changeover plate 907, and may be specifically changed by rotating the longitudinal transmission member with the electric driver head.

In this way, according to the specification parameter of the to-be-transferred component, after the changeover plate for supporting the component is determined, the hole position serial numbers of the limiting blocks on the changeover plate are searched for according to the limiting blocks on the changeover plate, and the hole position serial numbers are correspondingly written into the positions of the limiting blocks in the formula to obtain the corresponding formula (i.e., the target blueprint information) under the specification parameter.

Further, in some embodiments, the method further includes: determining, in the case that a hole position serial number of one changeover plate in the target blueprint information is zero, that no limiting block is placed at a position indicated by the hole position serial number in the changeover plate; and
determining, in the case that a hole position serial number of one changeover plate in the target blueprint information is non-zero, to place the limiting block at a position indicated by the hole position serial number in the changeover plate.

Illustratively, taking FIG. 9 as an example, for the No. 5 changeover plate 905, the hole position serial number of the position of the 1# limiting block is 5, and the hole position serial number of the position of the 2# limiting block is 0. In this case, it indicates that only one limiting block is placed on the No. 5 changeover plate 905, and specifically, a limiting block is placed at the 5# hole position of the No. 5 changeover plate 905.

Illustratively, still taking FIG. 9 as an example, for the No. 3 changeover plate 903, the hole position serial number of the position of the 1# limiting block is 2, and the hole position serial number of the position of the 2# limiting block is 12. In this case, it indicates that two limiting blocks are placed on the No. 3 changeover plate 903, and specifically, limiting blocks are respectively placed at the 2# hole position and the 12# hole position of the No. 3 changeover plate 903.

That is to say, in the target blueprint information, for a certain changeover plate, in the case that the hole position serial number of the position of a certain limiting block is 0, it indicates that no limiting block is placed at the corresponding position of the changeover plate.

In this way, after acquiring the current blueprint information and the target blueprint information, the controller may perform consistency matching on the current blueprint information and the target blueprint information, so as to determine whether the position of the at least one limiting block on the tray needs to be adjusted.

In S803, in the case that the current blueprint information is inconsistent with the target blueprint information, the position of the at least one limiting block on the tray is controlled to be adjusted, such that the tray matches the to-be-transferred component.

It should be noted that, in the embodiments of the present disclosure, consistency matching is performed between the current blueprint information of the to-be-measured vehicle read by the RFID and the target blueprint information issued by the MES system; in the case that the two pieces of information are consistent, it can be determined that the tray matches the to-be-transferred component, and in this case, the to-be-measured vehicle is directly released; and in the case that the two pieces of information are inconsistent, it can be determined that the tray does not match the to-be-transferred component, and in this case, the position of the limiting block on the tray needs to be adjusted, such that the tray matches the to-be-transferred component to place the to-be-transferred component.

It should also be noted that, in the embodiments of the present disclosure, the positional adjustment of the limiting block on the tray may also be referred to as automatic changeover on the to-be-measured vehicle, or automatic formula switching, such that the to-be-transferred component can be placed on the tray.

It can be understood that, in the embodiments of the present disclosure, the tray is located on the upper surface of the to-be-measured vehicle. In the transfer process of the to-be-measured vehicle, the at least one limiting block has limiting and supporting effects on the to-be-transferred component. That is to say, the at least one limiting block not only can limit the position of the to-be-transferred component on the tray, but also can support the to-be-transferred component on the tray.

It should also be noted that, in the embodiments of the present disclosure, the formula may be used for memorizing the position of the limiting block. In this way, the automatic formula switching here specifically refers to as the automatic replacement of the position of the limiting block according to the target blueprint information corresponding to the formula, such that the to-be-transferred component can be placed on the tray.

It can also be understood that, in the embodiments of the present disclosure, in order to reduce the debugging difficulty, before controlling the positional adjustment of the at least one limiting block on the tray, the controller needs to first control the driving member to perform a first driving action to drive the transmission member to move to the initial position.

In some embodiments, the driving member may include a first driving member arranged in a jacking sleeve assembly on the jacking mechanism, and the transmission member may include a transverse transmission member arranged in the tray. Correspondingly, the method further includes: controlling the jacking sleeve assembly on the jacking mechanism to perform a cap recognition action, such that the first driving member is connected to the transverse transmission member through the first connecting member in the jacking sleeve assembly, and controlling the first driving member to drive the first connecting member to rotate, such that the first connecting member drives the transverse transmission member to move to the initial position of the transverse transmission member.

In the embodiments of the present disclosure, the first driving member may be a first servo motor, and the first connecting member may be a first driver head (or referred to as a first sleeve). That is to say, the jacking sleeve assembly may include a first servo motor and a first driver head connected to a rotating shaft of the first servo motor. In addition, the transverse transmission member may be a first screw rod, and the transverse transmission member extends in the first direction.

In this way, the controller may control a sleeve cylinder on the jacking mechanism to extend and perform a cap recognition function, such that the first driver head is aligned with the first screw rod. Specifically, the jacking sleeve assembly as a whole may move in a direction close to the first screw rod along the axial direction of the rotating shaft, such that the first driver head is sleeved with the first screw rod. Then, the controller controls the first servo motor to drive the first driver head to rotate, such that the first driver head drives the first screw rod to move to the initial position of the first screw rod.

In some embodiments, the driving member may further include a second driving member arranged in a gripper sleeve assembly on the gripper mechanism, and the transmission member may further include a longitudinal transmission member arranged in the tray. Correspondingly, the method further includes: starting the robot, and controlling the robot to move from a first position to a second position; and controlling the gripper sleeve assembly on the gripper mechanism to perform a cap recognition action, such that the second driving member is connected to the longitudinal transmission member through the second connecting member in the gripper sleeve assembly, and controlling the second driving member to drive the second connecting member to rotate, such that the second connecting member drives the longitudinal transmission member to move to the initial position of the longitudinal transmission member.

In the embodiments of the present disclosure, the second driving member may be a second servo motor, and the second connecting member may be a second driver head (or referred to as a second sleeve). That is to say, the gripper sleeve assembly may include a second servo motor and a second driver head connected to a rotating shaft of the second servo motor. In addition, the longitudinal transmission member may be a second screw rod, and the longitudinal transmission member extends in the second direction.

Here, the first direction has an included angle with the second direction. Illustratively, the first direction is a horizontal axis direction, and the second direction is a vertical axis direction. In this case, an included angle between the first direction and the second direction is 90 degrees.

In the embodiments of the present disclosure, the first position of the robot is the origin of the robot, and the second position of the robot is a rotating work station of the longitudinal transmission member. That is to say, in the case that the controller allows the second driving member to work, the robot needs to be first started, and then is enabled to move to the rotating work station of the second screw rod.

In this way, the controller may control the sleeve on the gripper mechanism to perform a cap recognition function, such that the second driver head is aligned with the second screw rod. Specifically, the gripper sleeve assembly as a whole may move toward the second screw rod along the axial direction of the rotating shaft, such that the second driver head sleeves the second screw rod. Then, the controller controls the second servo motor to drive the second driver head to rotate, such that the second driver head drives the second screw rod to move to the initial position of the second screw rod.

In some embodiments, after the driving member drives the first screw rod and the second screw rod to separately move to the initial positions, controlling the positional adjustment of the at least one limiting block on the tray may include: sending, by the controller, a control instruction to the robot, where the control instruction is used to control the gripper mechanism arranged on the robot to perform gripping and placing actions on the at least one limiting block on the tray, such that the adjusted position of the at least one limiting block aligns with the position of the corresponding limiting block in the target blueprint information.

In a possible implementation, in the case that the limiting block on the tray is moved from a hole position serial number of a certain changeover plate to a hole position serial number of another changeover plate, or is moved from a hole position serial number of a certain changeover plate to another hole position serial number of the changeover plate, in some embodiments, the method may include: sending, by the controller, a first control instruction to the robot, where the first control instruction is used to control the gripper mechanism to grip the limiting block on the tray from a to-be-gripped position and control the gripper mechanism to place the limiting block at a to-be-placed position in the tray, and the position of the limiting block aligns with the position of the corresponding limiting block in the target blueprint information.

In another possible implementation, the limiting block includes at least a first size limiting block and a second size limiting block. In the case that the size of the existing limiting block in the tray does not meet the requirement, in some embodiments, the method may include: sending, by the controller, a second control instruction to the robot in the case that the limiting block on the tray is the first size limiting block and the corresponding limiting block in the target blueprint information is the second size limiting block, where the second control instruction is used to control the gripper mechanism to grip the first size limiting block on the tray from a to-be-gripped position and place the first size limiting block at a preset storage position, and control the gripper mechanism to grip the second size limiting block from the preset storage position and place the second size limiting block at a to-be-placed position in the tray, and the position of the second size limiting block aligns with the position of the corresponding limiting block in the target blueprint information.

In the embodiments of the present disclosure, in the case that the size of the limiting block in the current blueprint information is different from the size of the limiting block in the target blueprint information, for example, the height is different, the original limiting block in the tray needs to be placed in the preset storage position; then the limiting block required in the target blueprint information is gripped from the preset storage position, and the limiting block is placed at the to-be-placed position of the corresponding changeover plate according to the position requirement of the limiting block in the target blueprint information, such that the position of the limiting block aligns with the position of the corresponding limiting block in the target blueprint information.

Illustratively, the preset storage position is the storage mechanism shown in FIG. 6 or 7, and is configured for storing the limiting block. According to different specification requirements of the to-be-transferred components, a variety of limiting blocks can be stored here, and these limiting blocks can meet the requirements of different to-be-transferred components.

In another possible implementation, when the controller sends the control instruction to the robot, the method may further include: sending, by the controller, a photographing instruction to the robot, where the photographing instruction is used to control a visual detection system arranged on the robot to photograph the to-be-gripped position and the to-be-placed position, and is used to perform offset compensation on positions of the to-be-gripped position and the to-be-placed position.

In the embodiments of the present disclosure, the visual detection system is specifically arranged on the gripper mechanism of the robot. The visual detection system is a structure including a CCD camera, so the visual detection system may be referred to as a "CCD camera" or a "gripper camera".

That is to say, the controller may first send a photographing instruction to the robot, where the photographing instruction is used to control the visual detection system arranged on the robot to photograph the to-be-gripped position and the to-be-placed position, and is used to perform offset compensation on positions of the to-be-gripped position and the to-be-placed position. Then, the controller sends a gripping and placing instruction to the robot, where the gripping and placing instruction is used to control the gripper mechanism to grip the limiting block on the tray from the to-be-gripped position, and control the gripper mechanism to place the limiting block at the to-be-placed position in the tray, such that the position of the limiting block aligns with the position of the corresponding limiting block in the target blueprint information.

In a specific embodiment, the gripper mechanism gripping the limiting block from the to-be-gripped position may specifically include: controlling a visual detection system on the robot to move to a photographing position of the to-be-gripped position, and sending, by the controller, a first photographing instruction to the robot, where the first photographing instruction is used to instruct the visual detection system to photograph the to-be-gripped position; after the visual detection system completes the photographing of the to-be-gripped position, controlling the visual detection system to perform calculation based on a photographed first image to determine a first offset of the to-be-gripped position; then compensating an initial position of the to-be-gripped position based on the first offset to determine a target position of the to-be-gripped position; and then sending, by the controller, a first gripping instruction to the robot, controlling the gripper mechanism to move to the to-be-gripped position, and after moving to the target position of the to-be-gripped position, controlling, based on the first gripping instruction, the gripper mechanism to grip the limiting block on the to-be-gripped position. Illustratively, for details of the top-view structure corresponding to the to-be-gripped position, refer to FIG. 11. In this case, the first offset may include: an offset of -0.457 in the X-axis direction, an offset of -0.483 in the Y-axis direction, and an angle offset of 0.406.

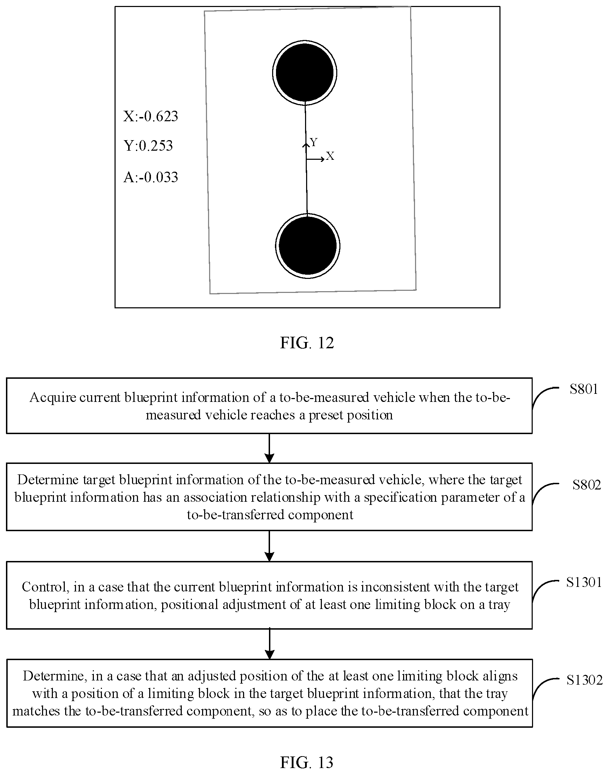

In another specific embodiment, the gripper mechanism placing the limiting block on the to-be-placed position may specifically include: controlling a visual detection system on the robot to move to a photographing position of the to-be-placed position, and sending, by the controller, a second photographing instruction to the robot, where the second photographing instruction is used to instruct the visual detection system to photograph the to-be-placed position; after the visual detection system completes the photographing of the to-be-placed position, controlling the visual detection system to perform calculation based on a photographed second image to determine a second offset of the to-be-placed position; then compensating an initial position of the to-be-placed position based on the second offset to determine a target position of the to-be-placed position; and then sending, by the controller, a first placement instruction to the robot, controlling the gripper mechanism to move to the to-be-placed position, and after moving to the target position of the to-be-placed position, controlling, based on the first placement instruction, the gripper mechanism to place the limiting block at the to-be-placed position. Illustratively, for details of the top-view structure corresponding to the to-be-placed position, refer to FIG. 12. In this case, the second offset may include: an offset of -0.623 in the X-axis direction, an offset of 0.253 in the Y-axis direction, and an angle offset of -0.033.

In this way, since the robot is provided with the gripper mechanism and the visual detection system, the controller can control the visual detection system to visually guide and correct the gripping position or the placement position, and the target position to be reached by the gripper assembly in the gripper mechanism can be accurately determined based on the corresponding offset data, such that the controller can control the gripper assembly to move to the target position according to the determined target position, and then the gripper assembly is enabled to move to the accurate gripping position or placement position to grip or place the limiting block, so as to adjust the position of the at least one limiting block.

In some embodiments, FIG. 13 is a schematic flowchart of another matching control method according to an embodiment of the present disclosure. As shown in FIG. 13, after S802, S803 may specifically include:
S1301, controlling, in the case that the current blueprint information is inconsistent with the target blueprint information, positional adjustment of at least one limiting block on the tray; and
S1302, determining, in the case that the adjusted position of the at least one limiting block aligns with the position of the limiting block in the target blueprint information, that the tray matches the to-be-transferred component, so as to place the to-be-transferred component.

It should be noted that, in the embodiments of the present disclosure, in the case that the current blueprint information of the to-be-measured vehicle read by the RFID is inconsistent with the target blueprint information issued by the MES system, the controller may control positional adjustment of the at least one limiting block on the tray until the adjusted position of the at least one limiting block aligns with the position of the limiting block in the target blueprint information.

It should also be noted that, in the embodiments of the present disclosure, in the case that the adjusted position of the at least one limiting block aligns with the position of the limiting block in the target blueprint information, it is determined that the tray successfully matches the to-be-transferred component; or it may also be referred to as successful changeover of the to-be-measured vehicle. That is to say, after the to-be-measured vehicle enters a changeover station, in the case that the current blueprint information read by the RFID is inconsistent with the target blueprint information, the position of at least one limiting block on the tray needs to be controlled to be adjusted, that is, the to-be-measured vehicle performs tooling changeover. In other words, during the wire-actuated tooling changeover, matching is performed at this station, such that the to-be-transferred component can be placed on the tray on the to-be-measured vehicle.

In some embodiments, after the positional adjustment of the at least one limiting block on the tray is completed, that is, the adjusted position of the at least one limiting block aligns with the position of the limiting block in the target blueprint information, the controller further needs to control the driving member to perform a second driving action to drive the transmission member to move to a corresponding axial positioning position in the target blueprint information.

The second driving action may be a reverse action of the first driving action. Illustratively, in the case that the first driving action instructs the driving member to drive the transmission member to move in the first axial direction, the second driving action instructs the driving member to drive the transmission member to move in a direction opposite to the first axial direction.

In the embodiments of the present disclosure, after the positional adjustment of the at least one limiting block on the tray is completed, controlling the driving member to perform the second driving action to drive the transmission member to return to the axial positioning position in the target blueprint information may specifically include: controlling the second driving member to rotate to drive the longitudinal transmission member to reach a positioning position in the second direction in the target blueprint information, controlling the gripper sleeve assembly on the gripper mechanism to perform a separation action, and controlling the robot to return to the first position; and controlling the first driving member to rotate to drive the transverse transmission member to reach a positioning position in the first direction in the target blueprint information, and controlling the jacking sleeve assembly on the jacking mechanism to perform a separation action.

In the embodiments of the present disclosure, the axial positioning position includes a positioning position in the first direction and a positioning position in the second direction. Illustratively, the positioning position in the first direction may be an X-axis positioning position, and the positioning position in the second direction may be a Y-axis positioning position.

In this way, after the positional adjustment of all the limiting blocks is completed, first, the gripper sleeve assembly of the robot performs a cap recognition action, and then, the second driving member (i.e., the second servo motor) moves to an absolute position, such that the second screw rod moves to the Y-axis positioning position of the target blueprint information, and then the gripper sleeve assembly is controlled to perform a separation action, such that the second screw rod is separated from the corresponding driver head; and after the second screw rod moves in place, the robot further needs to be controlled to return to the first position (i.e., the origin of the robot). Next, the first driving member (i.e., the first servo motor) moves to an absolute position, such that the first screw rod moves to the X-axis positioning position of the target blueprint information, and then the jacking sleeve assembly is controlled to perform a separation action, such that the first screw rod is separated from the corresponding driver head.

In the embodiments of the present disclosure, in the case that it is determined that the tray matches the to-be-transferred component, the to-be-measured vehicle needs to be released. However, before the to-be-measured vehicle is released, it is also necessary to confirm that the target blueprint information has been updated in the electronic tag. In some embodiments, the method may further include:
writing, by a reader/writer, the target blueprint information into the electronic tag on the to-be-measured vehicle;
reading the newly written blueprint information of the electronic tag through the reader/writer; and
allowing, in the case that the newly written blueprint information is consistent with the target blueprint information, the to-be-measured vehicle to be released.

That is to say, after it is determined that the tray matches the to-be-transferred component, the target blueprint information may also be written into the electronic tag of the to-be-measured vehicle, and then the newly written blueprint information is re-recognized through the RFID, and the newly written blueprint information is verified with the target blueprint information issued by the MES system. In the case that the two pieces of information are consistent, the successful writing of the electronic tag is confirmed, and at this time, the to-be-measured vehicle is allowed to be released.

In addition, when the position of the at least one limiting block on the tray is controlled to be adjusted, the embodiments of the present disclosure may further display the gripping and placing information of the limiting block through a human-machine interface (HMI), such that users can intuitively know the current working status of the limiting block.

In some embodiments, the method may further include: displaying, in response to a first operation instruction, the current gripping and placing information on the human-machine interface, where the current gripping and placing information includes at least: a number of gripping and placing times, a gripping count, a placing count, the to-be-gripped position of the limiting block, and the to-be-placed position of the limiting block.

It should be noted that, in the embodiments of the present disclosure, the first operation instruction may be an operation instruction generated by a user clicking an HMI button on the human-machine interface. According to the first operation instruction, the controller may display, on the human-machine interface, a picture shown in Table 1. The current gripping and placing information may be presented.

**Table 1**

| Working status of limiting block | 3 | Plate number | Position hole number |
|---|---|---|---|
| Gripping count | 2 | 7 | 1 |
| Placing count | 2 | 7 | 5 |

Here, the working status of the limiting block is used to indicate the number of gripping and placing times, that is, it indicates the current number of times of gripping and placing the limiting block; the gripping count is used to indicate the total number of times that the limiting blocks have been gripped, that is, it indicates the number of limiting blocks that have been gripped; and the placing count is used to indicate the total number of times that the limiting blocks have been placed, that is, it indicates the number of limiting blocks that have been placed. In addition, the plate number and the position hole number are used to indicate the position of the limiting block.

Illustratively, as shown in Table 1, when the limiting block is gripped and placed for the third time, the gripping count is 2 and the placing count is 2. In this case, the limiting block is gripped from the No. 1 hole position of the No. 7 changeover plate and placed at the No. 5 hole position of the No. 7 changeover plate.

In this way, by displaying the current gripping and placing information through the human-machine interface, the gripping position and the placement position where the limiting block currently needs to be gripped and placed can be intuitively seen, such that the user can know the current working status of the limiting block and the gripping and placing actions in time.

In some embodiments, the method further includes: controlling, based on the current gripping and placing information, the limiting block on the tray to be adjusted from the to-be-gripped position of the limiting block to the to-be-placed position of the limiting block.

It should be noted that, in the embodiments of the present disclosure, based on Table 1, the gripper mechanism of the robot may grip the limiting block at the No. 1 hole position of the No. 7 changeover plate, and then place the limiting block at the No. 5 hole position of the No. 7 changeover plate. In this way, when the limiting block on the tray is gripped from the gripping position to the corresponding placement position, the user can intuitively know the current working status of the limiting block according to the human-machine interface, thereby improving the efficiency of gripping and placing the limiting block.

In some embodiments, the method further includes: updating the current gripping and placing information on the human-machine interface after the positional adjustment based on the current gripping and placing information is completed.

It should be noted that, in the embodiments of the present disclosure, updating the current gripping and placing information on the human-machine interface may specifically include: controlling the number of gripping and placing times, the gripping count, and the placing count to separately perform an increment-by-one operation, updating the to-be-gripped position of the limiting block to a new to-be-gripped position of the limiting block, and updating the to-be-placed position of the limiting block to a new to-be-placed position of the limiting block.

Illustratively, after the gripping and placement of the limiting block as shown in Table 1 is completed, in the case that the limiting block is gripped from the No. 2 hole position of the No. 5 changeover plate and placed at the No. 4 hole position of the No. 6 changeover plate, the data in Table 1 will be updated to the data shown in Table 2.

**Table 2**

| Working status of limiting block | 4 | Plate number | Position hole number |
|---|---|---|---|
| Gripping count | 3 | 5 | 2 |
| Placing count | 3 | 6 | 4 |

That is to say, after the gripper mechanism of the robot grips the limiting block on the tray from the gripping position to the corresponding placement position, the current gripping and placing information displayed on the human-machine interface is updated in real time, such that the user can intuitively know the number of the completed gripping and placing actions, the gripping count, the placing count, and the like, which helps to improve the gripping and placing efficiency of the limiting block.

It should also be noted that, in the embodiments of the present disclosure, the human-machine interface may be displayed by a display equipped with the controller, such as the display TP1200 equipped with the PLC. Alternatively, the human-machine interface may adopt a separate visualization device. This is not limited herein.

In the case that the human-machine interface adopts a separate visualization device, for example, an HMI device, the HMI device needs to be electrically coupled to the controller. The HMI device may be configured to display the gripping and placing information of the limiting block. For example, information such as the number of gripping and placing times, the gripping count, the placing count, the to-be-gripped position of the limiting block, and the to-be-placed position of the limiting block may be displayed by the HMI device.

This embodiment provides a matching control method, which is specifically a control solution for matching the to-be-measured vehicle and the to-be-transferred component. Corresponding formulas may be automatically selected based on the to-be-transferred components with different specification parameters, the type of the vehicle may be automatically identified, and the position of the limiting block on the tray may be automatically adjusted, such that the tray matches the to-be-transferred component, and the to-be-transferred component can be placed on the tray. Thus, in an aspect, the automatic selection of corresponding target blueprint information based on the to-be-transferred components with different specification parameters enhances data security; in another aspect, during the product matching process, the manual replacement of the limiting block is changed to the automatic replacement, and in addition, the changeover logic of the robot is simple and no additional sensors are required, such that the degree of automation of the device is improved while labor costs and production costs are reduced, thereby improving the production efficiency during product matching; in yet another aspect, by controlling the distance adjustment of the screw rod in the tray and performing gripping and placing actions on the at least one limiting block on the tray, coupled with the added storage function, the limiting blocks can adapt to the to-be-transferred components with different specification parameters, thereby improving the compatibility.

In yet another embodiment of the present disclosure, based on the matching control method of the above embodiment, taking the case where the to-be-transferred component is the lower case body of the battery pack and the case where the to-be-measured vehicle is the Pack vehicle as an example, the present disclosure is mainly applied to the field of automatic assembly of packs, especially focusing on how the Pack vehicle can be adapted to accommodate various types of lower case bodies through automated station adjustments.

In the embodiment of the present disclosure, a Pack vehicle matching solution that is compatible with various types of lower case bodies is provided herein. The robot is controlled by PLC to achieve multi-functional system control such as screw rod distance adjustment, limiting block replacement, and automatic formula switching for the Pack vehicle. In addition, in the embodiment of the present disclosure, the limiting block may also be referred to as a positioning block, which is made of polyoxymethylene (POM), so the limiting block may also be referred to as a "POM block".

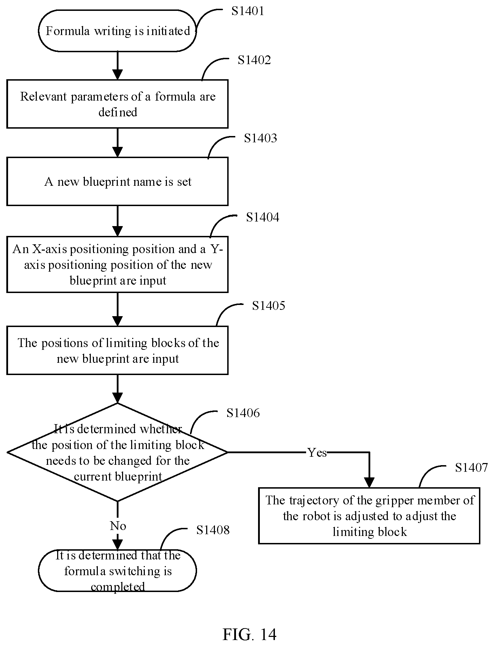

In some embodiments, FIG. 14 is a detailed schematic flowchart of a matching control method according to an embodiment of the present disclosure. As shown in FIG. 14, the detailed procedure may include the following steps.

In S1401, formula writing is initiated.

In S1402, relevant parameters of a formula are defined.

In S1403, a new blueprint name is set.

In S1404, an X-axis positioning position and a Y-axis positioning position of the new blueprint are input.

In S1405, the positions of limiting blocks of the new blueprint are input.

Here, after the X-axis positioning position and the Y-axis positioning position of the new blueprint are input, the position of each of the limiting blocks is determined by the robot, and then the positions of the limiting blocks of the new blueprint are input in the formula.

In S1406, it is determined whether the position of the limiting block needs to be changed for the current blueprint.

In S1407, the trajectory of the gripper member of the robot is adjusted to adjust the limiting block.

In S1408, it is determined that the formula switching is completed.

It should be noted that, in the embodiments of the present disclosure, for S1406, in the case that the determination result is that the position of the limiting block needs to be changed for the current blueprint, S1407 is performed, that is, the trajectory of the gripper member of the robot is adjusted to adjust the limiting block; and in the case that the determination result is that the position of the limiting block does not need to be changed for the current blueprint, S1408 is performed, that is, it is determined that the formula switching is completed.

It should also be noted that, in the embodiments of the present disclosure, a detailed process of matching the Pack vehicle and the lower case body is provided herein. Here, the specific logic flow may be as follows:
(1) In order to facilitate formula writing, relevant definitions may be established for the formula writing.

FIG. 9 provides a formula writing interface, which can write and display information such as a corresponding blueprint name, a vehicle number, a PACK name, a changeover plate number, a position of a 1# POM block, a position of a 2# POM block, a Y-axis positioning position, and an X-axis positioning position. Subsequently, the position of the POM block required by the corresponding blueprint information may be input to the formula writing interface of FIG. 9 according to the difference of the blueprint information and the difference of the lower case body.

FIG. 10 provides a two-dimensional image of a tray, where the two-dimensional image includes a changeover plate number, each Pack vehicle is provided with ten changeover plates, and a No. 1 hole position of each changeover plate is marked, so as to determine a position sequence of POM blocks on each changeover plate.

(2) In the formula, a blueprint name of the current blueprint information may be set in a "PACK name" column, and an enter key may be used to confirm that the blueprint name is to be stored in the controller. In addition, by selecting "previous" and "next", the changeover data of the corresponding blueprint information can be viewed. The vehicle number corresponds to a changed Pack vehicle, and the PACK name displays a blueprint name of the current Pack vehicle, or is referred to as a "blueprint type".

(3) The X-axis positioning position may be a distance between a No. 1 plate, a No. 2 plate, or a No. 3 plate and a No. 9 plate, which may be changed by rotating a corresponding screw rod by an electric driver head. The Y-axis positioning position may be a distance between a No. 4 plate or a No. 5 plate and a No. 6 plate or a No. 7 plate, which may be changed by rotating a corresponding screw rod by an electric driver head.

(4) The corresponding hole position serial numbers are found according to the corresponding POM blocks on the changeover plate required by the current lower case body, and then input into the positions of the POM blocks in the formula. A maximum of two POM blocks may be placed for one changeover plate number, but this is not specifically limited.

(5) In the case that the requirements for the POM blocks before and after the blueprint switching are different, for example, the sizes of the POM blocks before and after the blueprint switching are different (for example, the heights are different), the original POM block needs to be placed into the preset storage position, then a POM block required by the new blueprint is gripped from the preset storage position, and then the POM block is placed at the corresponding position on the changeover plate according to the POM position requirement of the new blueprint.

It should also be noted that, in the embodiments of the present disclosure, for the blueprint type, the blueprint type may specifically refer to a product type of the to-be-transferred component. Different product types correspond to different specifications of the lower case body, and different specifications of the lower case body may correspond to different formulas, that is, the POM block positions, the X-axis positioning positions, and the Y-axis positioning positions corresponding to different specifications of the lower case body are also different.

In addition, in the embodiments of the present disclosure, the changeover plate required for the current lower case body may be specifically determined based on the size specification of the lower case body. Illustratively, in the case that the size of the to-be-transferred component is large, i.e., a large lower case body, then the No. 1 changeover plate, the No. 2 changeover plate, the No. 4 changeover plate, the No. 5 changeover plate, the No. 6 changeover plate, the No. 7 changeover plate, the No. 8 changeover plate, and the No. 10 changeover plate may be selected; and in the case that the size of the to-be-transferred component is small, i.e., a small lower case body, then the No. 3 changeover plate, the No. 4 changeover plate, the No. 5 changeover plate, the No. 6 changeover plate, the No. 7 changeover plate, and the No. 9 changeover plate may be selected. In addition, for a large lower case body, 2 or more POM blocks may need to be placed on a single changeover plate for supporting and limiting.

Through the above embodiments, a solution of matching the Pack vehicle and the lower case body is provided, which can automatically select the corresponding formula according to the lower case bodies of different products, automatically identify the type of the vehicle, and automatically invoke the trajectory of the gripper member of the robot according to the position of the selected POM block. In the first aspect, the formula can be executed by matching the blueprint information issued by the MES system and the blueprint information read by the electronic tag, in the case that the two pieces of information are consistent, the vehicle is automatically released, and in the case that the two pieces of information are inconsistent, the formula is automatically switched, such that the tray matches the to-be-transferred component; in the second aspect, the manual replacement is changed to the automatic replacement, the robot changeover logic is simple, the full automation is unattended, and the change of the position of the limiting block can be recognized, determined, and guided by the visual detection system; in the third aspect, the structure is simple, the logic is clear, and there is no need to configure a plurality of sensors; in the fourth aspect, the automatic issuing function of the MES system is added while the manual selection function of the formula is reserved; in the fifth aspect, the actions of the preceding and subsequent stations and the Pack vehicle changeover station are parallel, which greatly improves the efficiency; that is, there is no need to wait for the vehicle changeover time during multi-station production; in the sixth aspect, by utilizing the servo motor to rotate the screw rod for distance adjustment and enabling the positional adjustment of the limiting block, the system can adapt to the dimensions of all the case bodies in the existing products, such that the compatibility is strong; in the seventh aspect, the on-site debugging efficiency is improved, the debugging difficulty is reduced, and the program logic during formula switching is optimized.

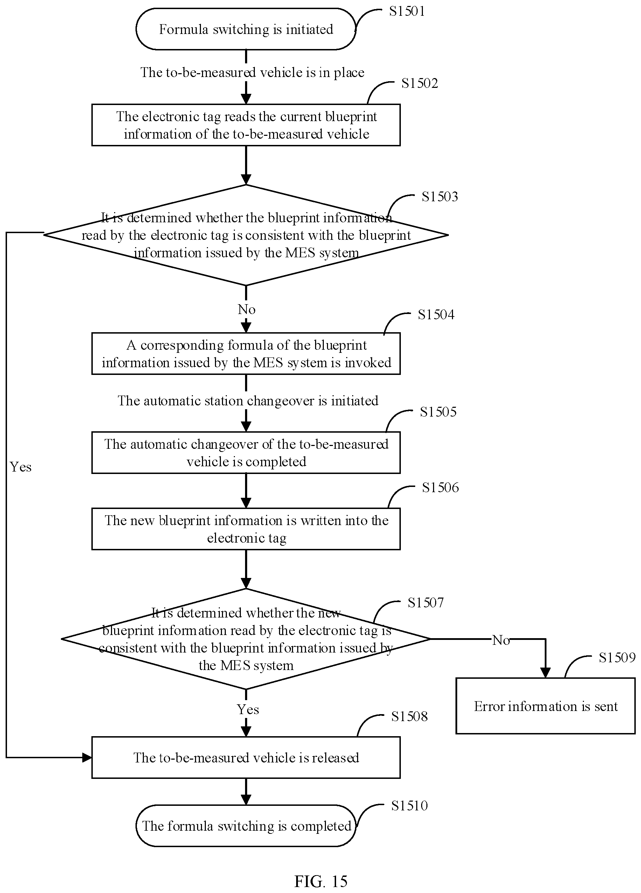

In some embodiments, FIG. 15 is a detailed schematic flowchart of another matching control method according to an embodiment of the present disclosure. As shown in FIG. 15, the detailed procedure may include the following steps.

In S1501, formula switching is initiated.

In S1502, the electronic tag reads the current blueprint information of the to-be-measured vehicle.

In S1503, it is determined whether the blueprint information read by the electronic tag is consistent with the blueprint information issued by the MES system.

In S1504, a corresponding formula of the blueprint information issued by the MES system is invoked.

Here, after the to-be-measured vehicle is in place, the electronic tag reads the current blueprint information of the to-be-measured vehicle and receives the blueprint information issued by the MES system; in the case that the blueprint information read by the electronic tag is inconsistent with the blueprint information issued by the MES system, then after the corresponding formula of the blueprint information issued by the MES system is invoked, the automatic changeover of the station is initiated, and the position of at least one limiting block on the tray is adjusted by the gripper mechanism of the robot until the automatic changeover of the to-be-measured vehicle is completed.

In S1505, the automatic changeover of the to-be-measured vehicle is completed.

In S1506, the new blueprint information is written into the electronic tag.

In S1507, it is determined whether the new blueprint information read by the electronic tag is consistent with the blueprint information issued by the MES system.

In S1508, the to-be-measured vehicle is released.

In S1509, error information is sent.

In S1510, the formula switching is completed.

In the embodiments of the present disclosure, for S1503, in the case that the blueprint information read by the electronic tag is consistent with the blueprint information issued by the MES system, S1508 may be performed, that is, the to-be-measured vehicle is released; and in the case that the blueprint information read by the electronic tag is inconsistent with the blueprint information issued by the MES system, S1504 to S1507 may be performed, and then it is determined whether the new blueprint information read by the electronic tag is consistent with the blueprint information issued by the MES system.

In the embodiments of the present disclosure, for S1507, in the case that the blueprint information read by the electronic tag is consistent with the blueprint information issued by the MES system, S1508 may be performed, that is, the to-be-measured vehicle is released; and in the case that the blueprint information read by the electronic tag is inconsistent with the blueprint information issued by the MES system, S1509 may be performed, that is, error information is sent. At this time, the device reports an error, and the cause of the fault can be manually confirmed.

It should also be noted that, in the embodiments of the present disclosure, a detailed process of formula switching is provided herein. The formula switching may be manual formula switching or automatic formula switching.

Illustratively, taking manual formula switching as an example, the human-machine interface may also respond to a second operation instruction, that is, the user clicks a (working status word) HMI button on the human-machine interface, and a pop-up picture shown in Table 3 may appear. In Table 3, in the case that the blueprint information (the formula) needs to be manually switched, a corresponding current blueprint number and a to-be-switched blueprint number may be input based on the vehicle number in the formula. Then, a current blueprint name and a to-be-switched blueprint name may be displayed based on the current blueprint number and the to-be-switched blueprint number, thereby intuitively determining whether the switching is correct. For example, the current blueprint number is 2, and the to-be-switched blueprint number is 3. In this case, a displayed current blueprint name is 149, and a displayed to-be-switched blueprint name is V71. Therefore, it can be intuitively learned that this switching is incorrect.

**Table 3**

| | |
|---|---|
| Working status word of robot | 56 |
| Current blueprint number | 3 |
| To-be-switched blueprint number | 2 |
| Blueprint number issued by MES | 0 |
| To-be-switched blueprint name | V71 |
| Current blueprint name | 149 |
| X-axis working status | 3 |
| Y-axis working status | 1 |

In addition, as shown in Table 4, the blueprint number issued by the MES is inconsistent with the manually selected current blueprint number, or the blueprint number issued by the MES is 0. In this case, a corresponding prompt is given as a reminder. In the case that the blueprint number issued by the MES is inconsistent with the manually selected current blueprint number, a prompt will be given; for example, the product model of the MES is inconsistent with that of the PLC. Alternatively, in the case that the blueprint number issued by the MES is 0, a prompt will also be given; for example, the product model of the MES cannot be 0, as a reminder.

**Table 4**

| | |
|---|---|
| The product models of MES and PLC are inconsistent | MES product model cannot be 0 |

It should also be noted that, in the embodiments of the present disclosure, the plate number displayed under the gripping count indicates the changeover plate number currently to be gripped, and the position hole number indicates the hole position serial number currently to be gripped; the plate number under the placing count indicates the changeover plate number currently to be placed, and the position hole number indicates the hole position serial number currently to be placed.

Illustratively, the above Table 1 and Table 2 provide schematic gripping and placing POM block data. The working status of the limiting block indicates the current number of times of gripping and placing the POM block, the gripping count indicates the total number of times that the POM blocks have been gripped, and the placing count indicates the total number of times that the POM blocks have been placed. As shown in Table 1, when the POM block is gripped and placed for the third time, the gripping count is 2 and the placing count is 2. At this time, the POM block is gripped from the No. 1 hole position of the No. 7 changeover plate and placed at the No. 5 hole position of the No. 7 changeover plate. Then, after the POM block is gripped and placed this time, in the case that the POM block is gripped from the No. 2 hole position of the No. 5 changeover plate and placed at the No. 4 hole position of the No. 6 changeover plate next time, the data in Table 1 will be updated to the data shown in Table 2.

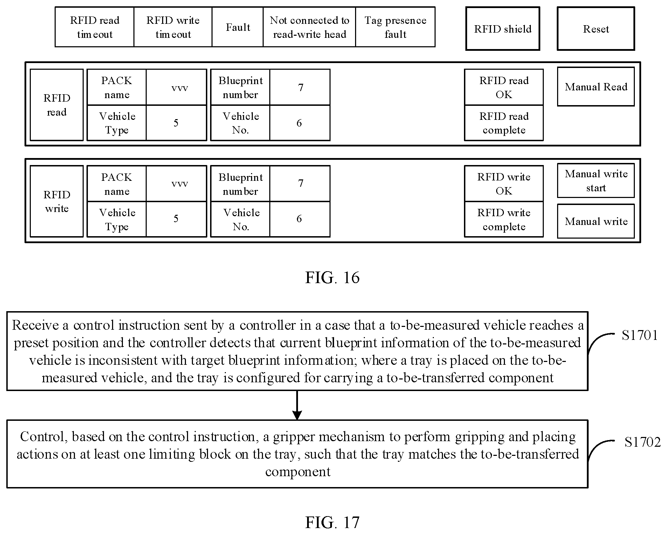

In some embodiments, for the recognition logic of the electronic tag, a logic control solution of RFID chip identification information is also provided herein. FIG. 16 is a schematic diagram of an operation interface of an electronic tag according to an embodiment of the present disclosure. As shown in FIG. 16, the operation interface may include two parts: reading and writing. Details are as follows:
(1) The top end of the operation interface is an alarm prompt bar, which is displayed in red when a corresponding alarm or error is generated.
(2) There is a "Manual Read" button in the reading section, which will not be externally operated in a non-manual mode. Clicking this button in a manual mode will read and display the required data if there is an RFID chip. The manual mode and the automatic mode may be controlled by an HMI interface and a button thereof.
(3) In the automatic mode, if the RFID chip is not shielded, the current information of the to-be-measured vehicle, such as a blueprint number, will be automatically read. Then, the blueprint number read by the RFID is compared with the blueprint number issued by the MES system to determine whether a changeover is required. The blueprint number issued by the MES system is compared with the to-be-switched blueprint number to determine whether the blueprint number is successfully issued, thereby achieving a certain fool-proofing effect.
(4) A "Manual Write" button, like the "Manual Read" button, will not be externally operated in a non-manual mode (i.e., automatic mode). In a manual mode, the PACK name and the blueprint number can be manually written. Then a confirmation button on an HMI interface keyboard is pressed. If writing is confirmed, a "Manual Write Start" button is clicked, and then the "Manual Write" button is clicked. The written data may be written into the RFID chip.
(5) Manual writing has to be performed in the manual mode, and the "Manual Write Start" button is selected first, and then the "Manual Write" button is selected; otherwise, no writing is performed. In this way, the probability of accidental manual touch is reduced.
(6) Read OK or write OK. A corresponding prompt box changes color (for example, changes from white to green), to indicate that the operation is successful.

Through the above embodiments, the specific implementation of the above embodiments is described in detail. It can be seen from the technical solutions of the above embodiments that the technical solutions of the embodiments of the present disclosure can make the degree of automation of the device higher (from manual replacement to machine replacement), the data security improved (issuing blueprint information through the MES system and electronic tag identification), the efficiency higher (reducing the manpower for changeover and the changeover cycle time), and the compatibility higher (adding the automated storage and retrieval system to make it accommodate a wide range of lower case bodies), and can also improve the on-site debugging efficiency, reduce the debugging difficulty, and optimize the program logic during formula switching.

In yet another embodiment of the present disclosure, referring to FIG. 17, a schematic flowchart of yet another matching control method according to an embodiment of the present disclosure is shown. As shown in FIG. 17, the method may include:
S1701, receiving a control instruction sent by a controller in the case that a to-be-measured vehicle reaches a preset position and the controller detects that current blueprint information of the to-be-measured vehicle is inconsistent with target blueprint information; where a tray is placed on the to-be-measured vehicle, and the tray is configured for carrying a to-be-transferred component; and
S1702, controlling, based on the control instruction, the gripper mechanism to perform gripping and placing actions on at least one limiting block on the tray, such that the tray matches the to-be-transferred component.

It should be noted that, in the embodiment of the present disclosure, the method is applicable to a robot. The robot may be a six-axis robot. Through interaction between the six-axis robot and the controller, the tray can match the to-be-transferred component, such that the to-be-transferred component can be placed on the tray.

It should also be noted that, in the embodiment of the present disclosure, the robot may include a gripper mechanism arranged at the tail end of a mechanical arm. Specifically, the gripper mechanism on the robot is controlled to adjust the position of the at least one limiting block on the tray, such that the adjusted position of the at least one limiting block aligns with the position of the corresponding limiting block in the target blueprint information, that is, the tray matches the to-be-transferred component, thereby reducing labor costs and production costs, and improving the production efficiency.

In a possible implementation, in the case that the limiting block on the tray is moved from a hole position serial number of a certain changeover plate to a hole position serial number of another changeover plate, or is moved from a hole position serial number of a certain changeover plate to another hole position serial number of the changeover plate, in some embodiments, the method may include: receiving a first control instruction sent by the controller; and controlling, based on the first control instruction, the gripper mechanism to grip the limiting block on the tray from a to-be-gripped position, and controlling the gripper mechanism to place the limiting block at a to-be-placed position in the tray, where the position of the limiting block aligns with the position of the corresponding limiting block in the target blueprint information.

In the embodiment of the present disclosure, in the case that the specification of the limiting block in the current blueprint information is the same as the specification of the limiting block in the target blueprint information, the existing limiting block in the tray does not need to be placed at the preset storage position, and may be directly placed at the to-be-placed position in the tray. Illustratively, in the tray, the limiting block is gripped from the No. 1 hole position of the No. 7 changeover plate and placed at the No. 5 hole position of the No. 7 changeover plate. In this case, the limiting block does not need to be placed at the preset storage position. Specifically, the gripper mechanism may be controlled to grip the limiting block from the to-be-gripped position in the tray, and the gripper mechanism may be controlled to place the limiting block at the to-be-placed position in the tray.

In another possible implementation, the limiting block includes at least a first size limiting block and a second size limiting block. In the case that the size of the existing limiting block in the tray does not meet the requirement, in some embodiments, the method may include: receiving, in the case that the limiting block on the tray is the first size limiting block and the corresponding limiting block in the target blueprint information is the second size limiting block, a second control instruction sent by the controller; and controlling, based on the second control instruction, the gripper mechanism to grip the first size limiting block on the tray from a to-be-gripped position and place the first size limiting block at a preset storage position, and controlling the gripper mechanism to grip the second size limiting block from the preset storage position and place the second size limiting block at a to-be-placed position in the tray, where the position of the second size limiting block aligns with the position of the corresponding limiting block in the target blueprint information.

In the embodiment of the present disclosure, in the case that the specification of the limiting block in the current blueprint information is different from the specification of the limiting block in the target blueprint information, for example, the height is different, the original limiting block in the tray needs to be placed at the preset storage position; then the limiting block required in the target blueprint information is gripped from the preset storage position, and according to the position requirement of the limiting block in the target blueprint information, the gripper mechanism is controlled to place the limiting block at the to-be-placed position of the corresponding changeover plate, such that the position of the limiting block aligns with the position of the corresponding limiting block in the target blueprint information.

Illustratively, the preset storage position is the storage mechanism shown in FIG. 6 or 7, and is configured for storing the limiting block. According to different specification requirements of the to-be-transferred components, a variety of limiting blocks can be stored here, and these limiting blocks can meet the requirements of different to-be-transferred components.

In still another possible implementation, the gripper mechanism further includes a visual detection system. Correspondingly, when the controller sends the control instruction to the robot, the method may further include: receiving a photographing instruction sent by the controller; and controlling, based on the photographing instruction, the visual detection system to photograph the to-be-gripped position and the to-be-placed position, and performing offset compensation on positions of the to-be-gripped position and the to-be-placed position according to the photographed image.

In the embodiments of the present disclosure, the visual detection system is specifically arranged on the gripper mechanism of the robot. The visual detection system is a structure including a CCD camera, so the visual detection system may be referred to as a "CCD camera" or a "gripper camera".

That is to say, the controller may first send a photographing instruction to the robot to control the visual detection system to photograph the to-be-gripped position and the to-be-placed position, and to perform offset compensation on the positions of the to-be-gripped position and the to-be-placed position. Then, the controller sends a gripping and placing instruction to the robot to control the gripper mechanism to grip the limiting block on the tray from the to-be-gripped position, and control the gripper mechanism to place the limiting block at the to-be-placed position in the tray, such that the position of the limiting block aligns with the position of the corresponding limiting block in the target blueprint information.

In a specific embodiment, the gripper mechanism gripping the limiting block from the to-be-gripped position may specifically include: after the visual detection system is moved to the photographing position of the to-be-gripped position, receiving a first photographing instruction sent by the controller; photographing, based on the first photographing instruction, the to-be-gripped position by using the visual detection system, and performing calculation based on a photographed first image to determine a first offset of the to-be-gripped position; compensating an initial position of the to-be-gripped position based on the first offset to determine a target position of the to-be-gripped position; and receiving a first gripping instruction sent by the controller, and controlling the gripper mechanism to move to the to-be-gripped position, and after moving to the target position of the to-be-gripped position, gripping the limiting block at the to-be-gripped position by using the gripper mechanism.

Illustratively, based on the visual detection system, for details of the top-view structure corresponding to the to-be-gripped position, refer to FIG. 11. In this case, the first offset may include: an offset of -0.457 in the X-axis direction, an offset of -0.483 in the Y-axis direction, and an angle offset of 0.406.

In another specific embodiment, the gripper mechanism placing the limiting block at the to-be-placed position may specifically include: after moving the visual detection system to the photographing position of the to-be-placed position, receiving a second photographing instruction sent by the controller; photographing, based on the second photographing instruction, the to-be-placed position by using the visual detection system, and performing calculation based on a photographed second image to determine a second offset of the to-be-placed position; compensating an initial position of the to-be-placed position based on the second offset to determine a target position of the to-be-placed position; and receiving a first placement instruction sent by the controller, and controlling the gripper mechanism to move to the to-be-placed position, and after moving to the target position of the to-be-placed position, placing the limiting block at the to-be-placed position by using the gripper mechanism.

Illustratively, based on the visual detection system, for details of the top-view structure corresponding to the to-be-placed position, refer to FIG. 12. In this case, the second offset may include: an offset of -0.623 in the X-axis direction, an offset of 0.253 in the Y-axis direction, and an angle offset of -0.033.

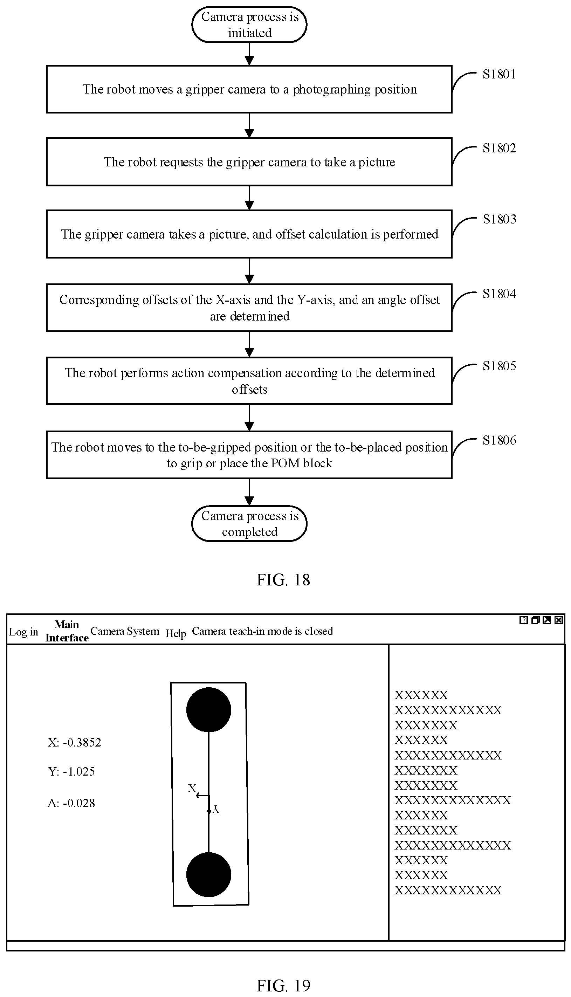

In some embodiments, FIG. 18 is a detailed schematic flowchart of still another matching control method according to an embodiment of the present disclosure. As shown in FIG. 18, the detailed procedure may include the following steps.

In S1801, the robot moves a gripper camera to a photographing position.

In S1802, the robot requests the gripper camera to take a picture.

In S1803, the gripper camera takes a picture, and offset calculation is performed,

In S1804, corresponding offsets of the X-axis and the Y-axis, and an angle offset are determined.

In S1805, the robot performs action compensation according to the determined offsets.

In S1806, the robot moves to the to-be-gripped position or the to-be-placed position to grip or place the POM block.

It should be noted that, in the embodiment of the present disclosure, FIG. 18 is the detailed procedure of controlling actions of the robot by the controller. The offset data here is acquired in a robot coordinate system, calibrated by an initial position, and then corrected based on the offsets.

It should also be noted that, in the embodiment of the present disclosure, for the visual detection system (i.e., the gripper camera), the camera action process is initiated first, and then the controller sends the control instruction to the robot to perform S1801 to S1806, such that the position of the limiting block is automatically identified according to vision, and the POM block can be gripped and placed more accurately in combination with the relative offset data fed back; and finally, the camera action process is completed.

Illustratively, the first image and the second image photographed by the visual detection system may also be displayed by a visualization device. FIG. 19 is a schematic diagram of a display interface of a visualization device according to an embodiment of the present disclosure. As shown in FIG. 19, the display interface is taken as a visual software interface, with an actual photographing effect diagram displayed on the left side and real-time photographing parameters listed in the taskbar on the right side.

An embodiment of the present disclosure provides a matching control method, which is applicable to a robot. Since the robot is provided with the gripper mechanism and the visual detection system, the controller can control the visual detection system to visually guide and correct the gripping position or the placement position, and the target position to be reached by the gripper assembly in the gripper mechanism can be accurately determined based on the corresponding offset data, such that the controller can control the gripper assembly to move to the target position according to the determined target position, and then the gripper assembly is enabled to move to the accurate gripping position or placement position to grip or place the limiting block, so as to adjust the position of the at least one limiting block. Therefore, the tray can match the to-be-transferred components of various case body sizes.

It should be noted that in the present disclosure, the terms "include", "comprise", or any other variants thereof are intended to cover non-exclusive inclusion, such that a process, a method, an item, or an apparatus including a series of elements includes not only those elements but also other elements not explicitly listed, or elements inherent to such process, method, item, or apparatus. In the absence of further limitations, an element limited by the phrase "comprising a..." or "including a ..." does not exclude the presence of additional identical elements in a process, method, item, or apparatus that includes the element.

The serial numbers of the embodiments of the present disclosure described above are for the purpose of describing only and do not represent the superiority or inferiority of the embodiments.

The methods disclosed in the method embodiments provided in the present disclosure may be combined in any manner without conflict to obtain new method embodiments,

The features disclosed in the product embodiments provided in the present disclosure may be combined in any manner without conflict to obtain new product embodiments.

The features disclosed in the method or device embodiments provided in the present disclosure may be combined in any manner without conflict to obtain new method or device embodiments.

The foregoing description is merely the specific embodiments of the present disclosure, but the protection scope of the present disclosure is not limited thereto; and changes or substitutions that any one skilled in the art can easily think of within the technical scope disclosed by the present disclosure shall all fall within the protection scope of the present disclosure.

### Industrial Applicability

The present disclosure provides a matching control method and system. Provided is a component matching control method, which is applicable to a controller; the matching control method is applicable to a robot, and the robot includes a gripper mechanism arranged at the tail end of a mechanical arm; the matching system includes: a to-be-measured vehicle, a robot, a storage mechanism, and a jacking mechanism. The present disclosure can be compatible with to-be-transferred components with different specification parameters, thereby improving the compatibility; meanwhile, labor costs and production costs can be reduced, thereby improving the production efficiency.

## Claims

1. A matching control method, wherein the method comprises:
acquiring current blueprint information of a to-be-measured vehicle when the to-be-measured vehicle reaches a preset position, wherein a tray is placed on an upper surface of the to-be-measured vehicle, and the tray is configured for carrying a to-be-transferred component;
determining target blueprint information of the to-be-measured vehicle, wherein the target blueprint information has an association relationship with a specification parameter of the to-be-transferred component; and
controlling, in a case that the current blueprint information is inconsistent with the target blueprint information, positional adjustment of at least one limiting block on the tray, such that the tray matches the to-be-transferred component to enable the to-be-transferred component to be placed.

2. The method according to claim 1, wherein before controlling the positional adjustment of the at least one limiting block on the tray, the method further comprises:
controlling a driving member to perform a first driving action to drive a transmission member to move to an initial position; and
after completing the positional adjustment of the at least one limiting block on the tray, the method further comprises: controlling the driving member to perform a second driving action to drive the transmission member to move to a corresponding axial positioning position in the target blueprint information.

3. The method according to claim 1 or 2, wherein controlling the positional adjustment of the at least one limiting block on the tray comprises:
sending a control instruction to a robot, wherein the control instruction is used to control a gripper mechanism arranged on the robot to perform gripping and placing actions on the at least one limiting block on the tray, such that an adjusted position of the at least one limiting block aligns with a position of a corresponding limiting block in the target blueprint information.

4. The method according to claim 3, wherein sending the control instruction to the robot comprises:
sending a first control instruction to the robot, wherein the first control instruction is used to control the gripper mechanism to grip the limiting block on the tray from a to-be-gripped position and control the gripper mechanism to place the limiting block at a to-be-placed position in the tray, and the position of the limiting block aligns with the position of the corresponding limiting block in the target blueprint information.

5. The method according to claim 3, wherein the limiting block comprises at least a first size limiting block and a second size limiting block; and sending the control instruction to the robot comprises:
sending a second control instruction to the robot in a case that the limiting block on the tray is the first size limiting block and the corresponding limiting block in the target blueprint information is the second size limiting block, wherein the second control instruction is used to control the gripper mechanism to grip the first size limiting block on the tray from a to-be-gripped position and place the first size limiting block at a preset storage position, and control the gripper mechanism to grip the second size limiting block from the preset storage position and place the second size limiting block at a to-be-placed position in the tray, and a position of the second size limiting block aligns with a position of a corresponding limiting block in the target blueprint information.

6. The method according to claim 4 or 5, wherein sending the control instruction to the robot further comprises:
sending a photographing instruction to the robot, wherein the photographing instruction is used to control a visual detection system arranged on the robot to photograph the to-be-gripped position and the to-be-placed position, and is used to perform offset compensation on positions of the to-be-gripped position and the to-be-placed position.

7. The method according to claim 6, wherein sending the control instruction to the robot further comprises:
controlling the visual detection system on the robot to move to a photographing position of the to-be-gripped position, and sending a first photographing instruction to the robot, wherein the first photographing instruction is used to instruct the visual detection system to photograph the to-be-gripped position;
after the photographing of the to-be-gripped position is completed by the visual detection system, controlling the visual detection system to perform calculation based on a photographed first image to determine a first offset of the to-be-gripped position;
compensating an initial position of the to-be-gripped position according to the first offset to determine a target position of the to-be-gripped position; and
sending a first gripping instruction to the robot, controlling the gripper mechanism to move to the to-be-gripped position, and after moving to the target position of the to-be-gripped position, controlling, based on the first gripping instruction, the gripper mechanism to grip the limiting block on the to-be-gripped position.

8. The method according to claim 6 or 7, wherein sending the control instruction to the robot further comprises:
controlling the visual detection system on the robot to move to a photographing position of the to-be-placed position, and sending a second photographing instruction to the robot, wherein the second photographing instruction is used to instruct the visual detection system to photograph the to-be-placed position;
after the photographing of the to-be-placed position is completed by the visual detection system, controlling the visual detection system to perform calculation based on a photographed second image to determine a second offset of the to-be-placed position;
compensating an initial position of the to-be-placed position according to the second offset to determine a target position of the to-be-placed position; and
sending a first placement instruction to the robot, controlling the gripper mechanism to move to the to-be-placed position, and after moving to the target position of the to-be-placed position, controlling, based on the first placement instruction, the gripper mechanism to place the limiting block at the to-be-placed position.

9. The method according to any one of claims 1 to 8, wherein the method further comprises:
determining, in a case that the adjusted position of the at least one limiting block aligns with the position of the limiting block in the target blueprint information, that the tray successfully matches the to-be-transferred component.

10. The method according to any one of claims 1 to 9, wherein the method further comprises: constructing, in advance, the target blueprint information according to the specification parameter of the to-be-transferred component; and
constructing, in advance, the target blueprint information according to the specification parameter of the to-be-transferred component comprises:
determining, according to the specification parameter of the to-be-transferred component, at least one changeover plate for supporting the to-be-transferred component and the limiting blocks on the at least one changeover plate; and
determining, according to the limiting blocks on the at least one changeover plate, hole position serial numbers of the limiting blocks on the at least one changeover plate, and correspondingly writing the hole position serial numbers into positions of the limiting blocks on the at least one changeover plate in the target blueprint information.

11. The method according to claim 10, wherein the method further comprises:
determining, in a case that a hole position serial number of one changeover plate in the target blueprint information is zero, that no limiting block is placed at a position indicated by the hole position serial number in the changeover plate; and
determining, in a case that a hole position serial number of one changeover plate in the target blueprint information is non-zero, to place the limiting block at a position indicated by the hole position serial number in the changeover plate.

12. The method according to any one of claims 1 to 9, wherein when controlling the positional adjustment of the at least one limiting block on the tray, the method further comprises:
displaying, in response to a first operation instruction, current gripping and placing information on a human-machine interface;
wherein the current gripping and placing information comprises at least: a number of gripping and placing times, a gripping count, a placing count, a to-be-gripped position of the limiting block, and a to-be-placed position of the limiting block.

13. The method according to claim 12, wherein the method further comprises:
controlling, based on the current gripping and placing information, the limiting block on the tray to be adjusted from the to-be-gripped position of the limiting block to the to-be-placed position of the limiting block.

14. The method according to claim 12 or 13, wherein the method further comprises:
updating, after the positional adjustment based on the current gripping and placing information is completed, the current gripping and placing information on the human-machine interface; and
updating the current gripping and placing information on the human-machine interface comprises: controlling the number of gripping and placing times, the gripping count, and the placing count to separately perform an increment-by-one operation, updating the to-be-gripped position of the limiting block to a new to-be-gripped position of the limiting block, and updating the to-be-placed position of the limiting block to a new to-be-placed position of the limiting block.

15. A matching control method, applicable to a robot, wherein the robot comprises a gripper mechanism arranged at a tail end of a mechanical arm, and the method comprises:
receiving a control instruction sent by a controller in a case that a to-be-measured vehicle reaches a preset position and the controller detects that current blueprint information of the to-be-measured vehicle is inconsistent with target blueprint information, wherein a tray is placed on the to-be-measured vehicle, and the tray is configured for carrying a to-be-transferred component; and
controlling, based on the control instruction, the gripper mechanism to perform gripping and placing actions on at least one limiting block on the tray, such that the tray matches the to-be-transferred component.

16. The method according to claim 15, wherein controlling, based on the control instruction, the gripper mechanism to perform the gripping and placing actions on the at least one limiting block on the tray comprises:
receiving a first control instruction sent by the controller; and
controlling, based on the first control instruction, the gripper mechanism to grip the limiting block on the tray from a to-be-gripped position and controlling the gripper mechanism to place the limiting block at a to-be-placed position in the tray, wherein a position of the limiting block aligns with a position of a corresponding limiting block in the target blueprint information.

17. The method according to claim 15, wherein the limiting block comprises at least a first size limiting block and a second size limiting block; and controlling, based on the control instruction, the gripper mechanism to perform the gripping and placing actions on the at least one limiting block on the tray comprises:
receiving a second control instruction sent by the controller in a case that the limiting block on the tray is the first size limiting block and the corresponding limiting block in the target blueprint information is the second size limiting block; and
controlling, based on the second control instruction, the gripper mechanism to grip the first size limiting block on the tray from a to-be-gripped position and place the first size limiting block at a preset storage position, and controlling the gripper mechanism to grip the second size limiting block from the preset storage position and place the second size limiting block at a to-be-placed position in the tray, wherein a position of the second size limiting block aligns with a position of a corresponding limiting block in the target blueprint information.

18. The method according to claim 16 or 17, wherein the gripper mechanism further comprises a visual detection system, and the method further comprises:
receiving a photographing instruction sent by the controller; and
controlling, based on the photographing instruction, the visual detection system to photograph the to-be-gripped position and the to-be-placed position, and performing offset compensation on positions of the to-be-gripped position and the to-be-placed position according to a photographed image.

19. The method according to claim 18, wherein controlling, based on the control instruction, the gripper mechanism to perform the gripping and placing actions on the at least one limiting block on the tray further comprises:
after the visual detection system is enabled to move to a photographing position of the to-be-gripped position, receiving a first photographing instruction sent by the controller;
photographing, based on the first photographing instruction, the to-be-gripped position by the visual detection system, and calculating, based on a photographed first image, to determine a first offset of the to-be-gripped position;
compensating an initial position of the to-be-gripped position according to the first offset to determine a target position of the to-be-gripped position; and
receiving a first gripping instruction sent by the controller, and controlling the gripper mechanism to move to the to-be-gripped position, and after moving to the target position of the to-be-gripped position, gripping the limiting block at the to-be-gripped position by the gripper mechanism.

20. The method according to claim 18 or 19, wherein controlling, based on the control instruction, the gripper mechanism to perform the gripping and placing actions on the at least one limiting block on the tray further comprises:
after the visual detection system is enabled to move to a photographing position of the to-be-placed position, receiving a second photographing instruction sent by the controller;
photographing, based on the second photographing instruction, the to-be-placed position by the visual detection system, and calculating, based on a photographed second image, to determine a second offset of the to-be-placed position;
compensating an initial position of the to-be-placed position according to the second offset to determine a target position of the to-be-placed position; and
receiving a first placement instruction sent by the controller, and controlling the gripper mechanism to move to the to-be-placed position, and after moving to the target position of the to-be-placed position, placing the limiting block at the to-be-placed position by the gripper mechanism.

21. A matching system, wherein the matching system comprises:
a to-be-measured vehicle, comprising a tray and at least one limiting block arranged on the tray, wherein the tray is configured for carrying a to-be-transferred component, and the at least one limiting block is configured for limiting a position of the to-be-transferred component on the tray;
a robot, wherein a gripper mechanism is arranged on a mechanical arm of the robot, and the robot is configured for driving the gripper mechanism to move;
a storage mechanism, arranged at a position corresponding to the robot, the storage mechanism being configured for storing the limiting block; and
a jacking mechanism, arranged at a position corresponding to the robot, the jacking mechanism being configured for jacking and supporting the to-be-measured vehicle;
wherein in a case that the to-be-measured vehicle reaches a preset position and current blueprint information of the to-be-measured vehicle is inconsistent with target blueprint information of the to-be-measured vehicle, the gripper mechanism can grip or release the limiting block, and driven by the robot, can transport the limiting block to a position corresponding to a to-be-placed position in the tray, or transport the limiting block to a preset storage position in the storage mechanism; wherein the target blueprint information has an association relationship with a specification parameter of the to-be-transferred component.

22. The matching system according to claim 21, wherein the tray comprises a tray frame, a transverse clamping assembly, and a longitudinal clamping assembly; wherein
the transverse clamping assembly comprises a transverse clamping member and a transverse transmission member, the transverse clamping member is slidably connected to the tray frame and is provided with a transverse mounting part, and the limiting block can be connected to the transverse clamping member through the transverse mounting part; the transverse transmission member is in transmission connection with the transverse clamping member; in a movement process of the transverse transmission member, the transverse clamping member can be driven to move in a first direction;
the longitudinal clamping assembly comprises a longitudinal clamping member and a longitudinal transmission member, the longitudinal clamping member is slidably connected to the tray frame and is provided with a longitudinal mounting part, and the limiting block can be connected to the longitudinal clamping member through the longitudinal mounting part; the longitudinal transmission member is in transmission connection with the longitudinal clamping member; in a movement process of the longitudinal transmission member, the longitudinal clamping member can be driven to move in a second direction; the second direction has an included angle with the first direction.

23. The matching system according to claim 22, wherein the longitudinal clamping member comprises a first longitudinal clamping member and a second longitudinal clamping member, and the first longitudinal clamping member and the second longitudinal clamping member are both in transmission connection with the longitudinal transmission member; in the movement process of the longitudinal transmission member, the first longitudinal clamping member and the second longitudinal clamping member can be driven to move toward or away from each other, such that the first longitudinal clamping member and the second longitudinal clamping member cooperatively fix the to-be-transferred component.

24. The matching system according to claim 23, wherein the first longitudinal clamping member comprises a first changeover plate and at least one first limiting block arranged on the first changeover plate;
the second longitudinal clamping member comprises a second changeover plate and at least one second limiting block arranged on the second changeover plate;
wherein a plurality of said longitudinal mounting parts are arranged on each of the first changeover plate and the second changeover plate at intervals, longitudinal connecting parts are arranged at bottoms of both the first limiting block and the second limiting block, and the longitudinal mounting parts are detachably connected to the longitudinal connecting parts.

25. The matching system according to any one of claims 22 to 24, wherein the transverse clamping member comprises a first transverse clamping member and a second transverse clamping member arranged opposite to each other, the first transverse clamping member is in transmission connection with the transverse transmission member, and the second transverse clamping member is fixed to the tray frame; in the movement process of the transverse transmission member, the first transverse clamping member is driven to move in a direction close to or away from the second transverse clamping member, such that the first transverse clamping member and the second transverse clamping member cooperatively clamp the to-be-transferred component.

26. The matching system according to claim 25, wherein the first transverse clamping member comprises a third changeover plate and at least one third limiting block arranged on the third changeover plate;
the second transverse clamping member comprises a fourth changeover plate and at least one fourth limiting block arranged on the fourth changeover plate;
wherein a plurality of said transverse mounting parts are arranged on each of the third changeover plate and the fourth changeover plate at intervals, transverse connecting parts are arranged at bottoms of both the third limiting block and the fourth limiting block, and the transverse mounting parts are detachably connected to the transverse connecting parts.

27. The matching system according to any one of claims 21 to 26, wherein the gripper mechanism comprises: a connecting member, a moving assembly, and a gripper assembly; the gripper mechanism is arranged on the mechanical arm of the robot through the connecting member; the moving assembly is arranged on the connecting member; the gripper assembly is arranged on the moving assembly; driven by the moving assembly, the gripper assembly is movable in a direction close to or away from the to-be-placed position.

28. The matching system according to claim 27, wherein the moving assembly comprises a vertical driving member and a vertical sliding assembly; the vertical sliding assembly is arranged on the connecting member, and the gripper assembly is arranged on the vertical sliding assembly; one end of the vertical driving member is connected to the connecting member, and the other end of the vertical driving member is connected to the gripper assembly; driven by the vertical driving member, the gripper assembly is movable in an extension direction of the vertical sliding assembly.

29. The matching system according to claim 27 or 28, wherein the gripper assembly comprises a gripper driving member and at least two gripper members; one of the gripper members is slidably arranged on the moving assembly, one end of the gripper driving member is connected to the moving assembly, and the other end of the gripper driving member is connected to the gripper member slidably arranged on the moving assembly; driven by the gripper driving member, the at least two gripper members are movable toward each other to grip the limiting block, or the at least two grippers are movable away from each other to release the limiting block.

30. The matching system according to any one of claims 27 to 29, wherein the gripper mechanism further comprises a visual detection system; the visual detection system can be electrically coupled to a controller, and the visual detection system is configured for photographing a to-be-gripped position and the to-be-placed position and performing offset compensation on positions of the to-be-gripped position and the to-be-placed position.

31. The matching system according to any one of claims 21 to 30, wherein the storage mechanism comprises a supporting assembly and a carrying assembly, the carrying assembly is slidably arranged on the supporting assembly, the carrying assembly is provided with a storage portion adapted to the limiting block, and the supporting assembly is configured for supporting the carrying assembly.

32. The matching system according to claim 31, wherein the supporting assembly comprises two oppositely arranged supports, the carrying assembly comprises a plurality of carrying plates, the carrying plate is provided with the storage portion, and each of the carrying plates is slidably arranged between the two supports.
